# EUROPEAN PATENT SPECIFICATION

(11) **EP 3 496 985 B1**
(45) Date of publication and mention of the grant of the patent: **22.11.2023**
(21) Application number: 17761449.2
(22) Date of filing: 11.08.2017
(51) Int. Cl.: B61D 3/20, B61D 47/00, B65G 63/02

(54) **TRANSPORTATION UNIT TRANSFER SYSTEM WITH RAIL ALIGNMENT MEANS**
ÜBERTRAGUNGSSYSTEM EINER TRANSPORTEINHEIT MIT SCHIENENAUSRICHTUNGSMITTEL
SYSTÈME DE TRANSFERT D'UNITÉ DE TRANSPORT AVEC MOYENS D'ALIGNEMENT DE RAIL

(30) Priority: 11.08.2016 DK 201670618
(43) Date of publication of application: 19.06.2019
(73) Proprietor: Safe Green Logistics A/S, 9362 Gandrup (DK)
(72) Inventor: JENSEN, Heine Blach, 9362 Gandrup (DK)
(74) Representative: Guardian IP Consulting I/S
(86) International application number: PCT/EP2017/070528
(87) International publication number: WO 2018/029379

(56) References cited:
- WO-A1-85/03692
- CH-A5- 629 446
- DE-A1- 3 833 942

## Description

### Transportation unit transfer system with rail alignment means

The present invention relates to a system according to the preamble of claim 1.

The transportation vehicles of the system could be any of a number of different standard types of vehicles such as trucks, railcars, as well as any form of custom built vehicle. The first and second transportation vehicles could be identical or they could be different. For example in a typical situation, the first transportation vehicle will be a truck and the second transportation vehicle will be a railcar.

The transportation unit is of the type which is suitable for transporting cargo. Typically, the transportation unit will have a cargo support surface on which the cargo can be stacked. In some embodiments, the transportation unit will also comprise an enclosure surrounding the transportation surface for protecting the cargo. The transportation unit may most frequently consist of a box container, for example a container similar to a standard ISO shipping container. However, within the scope of the current specification, the transportation unit could also include a flatbed, a tank for fluids, a custom built container, a bulk materials container, etc.

The term transfer surface should be interpreted broadly and should encompass different types of surfaces which allow the transportation unit to be supported on the surfaces while still being displaceable along the surfaces. In one example, and as shown in the figures, the transfer surfaces on the transportation vehicles are arranged as sliding surfaces arranged on top of an upwardly extending rail. Likewise, in the embodiment shown in the figures, the transfer surfaces on the transportation unit are arranged as a downwardly facing sliding surface arranged in a downwardly facing U shaped groove.

However, in another embodiment (not shown), the transfer surface on the transportation vehicle could be arranged as a row of wheels or rollers and the transfer surface on the transportation unit could be a flat surface on the bottom of the transportation unit which rolls on the top of the rollers or wheels. The top portion of the rollers or wheels would therefore be considered a form of transfer surface. Likewise, a set of rollers/wheels could be arranged on the transportation vehicle and the transportation vehicles could be provided with a flat surface on which the rollers/wheels could roll. Such an arrangement is disclosed in applicant's own patent applications WO 2011/064621 and WO 2014/203024.

In some embodiments, the transfer surfaces will be arranged as planar surfaces while in other embodiments, the transfer surfaces could be arranged non planar.

In some embodiments, the transfer surfaces of the transportation vehicles will be arranged above or below the remaining surface of the transportation surface of the transportation vehicles either via a rail on or a groove in the transportation surface. Likewise, the transfer surface of the transportation unit will also be arranged above or below the remaining bottom surface of the transportation unit.

In some embodiments the transfer surfaces of the transportation vehicles and the transportation unit could be arranged such that the perpendicular distance between the two transfer surfaces of the first transportation vehicle, the perpendicular distance between the two transfer surfaces of the second transportation vehicle and the perpendicular distance between the two transfer surfaces of the transportation unit are all essentially equal. Should the transfer surfaces have different widths, then the distance between transfer surfaces should be defined as the distance between the centre lines of the portions of the transfer surfaces which are in contact with the transportation unit during normal use.

### Prior art

There are a number of systems described in the patent literature which disclose systems for transferring a transportation unit between different transport vehicles. It is especially interesting to transfer a transportation unit between a truck and a railcar. Moving cargo from trucks travelling on roads to railcars travelling on the rail system is of great interest, both for economic reasons but also for safety and environmental reasons. There are however not many commercial systems on the market as the combination of stability, strength, low cost, ease of use, lower power demands, etc. have not yet been effectively met by the systems proposed in the prior art.

EP1732797 B1 describes a system where a truck carrying a container is placed at an angle to a railcar and a mechanism mounted on the railcar pulls the container off the truck and onto the railcar. The motion of the container is at an acute angle to the longitudinal axis of the rail car. Once the container is pulled onto the railcar, the container is pivoted so that its longitudinal axis aligns with the longitudinal axis of the railcar. This requires a very complex and expensive mechanism on the railcar. In addition, the mechanism needs to be very strong in order to transfer the container at an angle.

Applicants own patent applications WO 2011/064621 and WO 2014/203024, discloses transfer systems for horizontally and transversally transferring a freight container between a railcar and a vehicle, where the transfer system is placed on the vehicle and comprises at least two grabber arms, which are solely movable in a direction transversal to the longitudinal extension of the vehicle. In WO 2014/203024 the movement of the grabber arms is accomplished by an endless chain driven by a drive wheel connected to a drive motor. Two tensioner wheels are placed at each side of said wheel, where said tensioner wheel cooperate with the chain in such way that one or the other tensioner wheels causes a tightening of the chain in dependence of whether the chain is driven in one or the other direction. The prior applications also pertain to a method of transferring a freight container between a railcar and a vehicle. The systems also disclose the transfer mechanism comprising rails on the transport wagon and wheels on a frame mounted to the bottom of a standard shipping container. The disclosed systems have however shown to be too complicated, too expensive, and not strong enough and have therefore been shown not to work effectively.

Other systems are disclosed in DE 195 01 543, EP 1 840 056, EP 1 945 545, EP 2 108 605, DE3833942, CH629446, WO8503692, GB458647 and DE10010782.

In particular, it was discovered that one major issue was related to the placement of the rails and wheels. Depending on where the rails and wheels are placed, the container/frame can bend during the transfer and can result in the system jamming during the transfer. Another major issue with the prior art is that many of the systems require the container to be lifted requiring large amounts of power and also placing large forces on the system thereby increasing costs. This is exemplified in CH629446 and WO8503692 where a lifting member 4 is transferred from one vehicle to another via transfer surface. Another major issue with the prior art is that most prior art transportation vehicles will bend and or twist when a heavy container is transferred between two transportation vehicles. This requires extensively stiff and expensive constructions to prevent misalignment of the transfer surfaces. This is exemplified in DE3833942 where there is a distance between the transfer surface and the alignment mechanism which will result in unacceptable deformation.

### Summary of the invention

It is the purpose of the invention to provide a more simple, cost efficient and suitable system for effectively transferring a transportation unit between two transportation vehicles, such as a truck and a railroad wagon, when compared to the transportation systems of the prior art. The transportation unit may most frequently comprise a container which is arranged to be transferred in a horizontal direction which is perpendicular to the longitudinal axis of the container and perpendicular to the longitudinal axis of a railcar or a truck. It is also the aim of the invention to provide said transverse transfer of the transportation unit between the railroad wagon and truck with a cycle time which does not exceed the cycle time of the prior art systems.

It is by the current invention realized, that this purpose can be achieved by the system according to the introduction further comprising the features of the characterizing portion of claim 1.

By arranging the aligning mechanism as connection members which engage both transportation vehicles, the transfer surfaces can be aligned in an easy manner without the need for large, expensive and stiff structures as is the case in the prior art.

The connection member should be understood as a member which has at least a vertically firm connection to one transportation vehicle and at least a vertically firm connection to the other transportation vehicle. In the embodiments shown in the figures, the connection members are permanently connected to the truck and engage with the railcar during the transfer. However, within the scope of the current invention, the connection members could be arranged as loose elements which are connected to both the first and second transportation vehicles just prior to the transfer operation. Or the connection members could be arranged such that one connection member is permanently connected to the first transportation vehicle and one connection member is permanently connected to the second transportation vehicle.

In one embodiment, in the second position, the connection member could be in contact with the ends of the upwardly facing transfer surfaces of both the first and second transportation vehicles. In this way, it could be said that the connection member has a vertically firm connection to the end of the upwardly facing transfer surface of one transportation vehicle and a vertically firm connection to the end of the upwardly facing transfer surface of the other transportation vehicle. By directly connecting the ends of the upwardly facing transfer surfaces of the first and second transportation vehicles, the stiffness of the entire system can be reduced since deformations of the vehicles will not cause vertical misalignment between the ends of adjacent transfer surfaces.

In one embodiment, the maximum distance between the transfer surfaces and the connection member in the connection member' second position in a direction perpendicular to the longitudinal axis of the transfer surfaces could be less than 50 cm. However, in another embodiment, the distance could less than 40cm, less than 30 cm, less than 20 cm or less than 10 cm.

In the embodiments shown in the figures, connection members comprise extendable pins extending from the truck into sockets in the railcar. However, in another embodiment, the connection members could be formed with one part on the first transportation vehicle and one part on the second transportation vehicle which both extend outwardly towards each other and engage at a location between the first and second transportation vehicles. Hence many different combinations of connection members are possible.

In one embodiment, the first and/or the second transportation vehicle could comprise a length adjustable folding kickstand, which is folded down prior to activation of the aligning mechanism. This kickstand could support the end of the transfer surfaces in the vertical direction.

In one embodiment, the connection members could furthermore be arranged to ensure horizontal alignment of the adjacent ends of the upwardly facing transfer surfaces of the first and second transportation vehicles during the transfer of the transportation unit in the direction parallel to the longitudinal axis of the transportation surface in the connection member's second position. In this way, when weight is applied to the mechanism opposing transfer surfaces will stay aligned.

In one embodiment, the connection members of the aligning mechanism are mounted on one transportation vehicle and arranged to be extendable and retractable along a direction parallel to the two transfer surfaces. This is similar to the embodiment shown in the figures, where the connection members extend linearly out from a recess in the truck towards the railcar. However, in other embodiments, the connection member could be rotated into place, folded into place, or any other form of movement. The movement could be via an actuator, for example a hydraulic cylinder, an electric motor, etc or the movement could be done via manual interaction, for example by an operator manually extending the connection member or pivoting it into place

In one advantageous embodiment, the connection members could be connected to the first transportation vehicle in an area underneath its transfer surfaces and could be connected to the second transportation vehicle in an area underneath its transfer surfaces. In this way the connection members can be placed quite close to the transfer surfaces while still remaining out of the way during the transfer of the transportation unit.

According to the invention, and as shown in the embodiment shown in the figures, the transportation surfaces of the first and/or the second transportation vehicles can comprise two rails in the form of upwardly extending elongated ridges and in that the transfer surfaces could be arranged as the upper surface of the rails. In one embodiment the connection members could be arranged inside the rails of one transportation vehicle in the connection members' first position and could extend into openings in the rails of the other transportation vehicle in the connection members second position.

In order to avoid the need for very rigid systems, the connection members and the transportation vehicles could be arranged so that the two transfer surfaces of the first transportation vehicle are able to pivot with regards to the two transfer surfaces of the second transportation vehicle about an axis which is perpendicular to and co-planar with the longitudinal axis of the transfer surfaces of the first and second transportation vehicles. This will especially be useful during the transfer of the transportation unit where the weight of the transportation unit will displace along the transfer surfaces over towards one side of the transportation vehicles. This will cause the transportation vehicles to tip slightly.

In one embodiment, the engagement between the connection member and at least one of the transportation vehicles could be pivotably arranged such that the connection member is able to pivot with regards to the transportation vehicle. In this way, due to the pivotable connection between the connection member and the transportation vehicle, the transfer surfaces of the transportation vehicles are pivotable with respect to each other while still maintaining vertical alignment.

In one embodiment, one end of the connection member could be tapered or the free end of the connection member could be inserted into a tapered hole.

In general, the connection member, in the first position, could be connected to a first transportation vehicle and a free end of the connection member in the second position could be inserted into an opening in the second transportation vehicle. In this case the free end of the connection member which is insertable into the opening in the second transportation vehicle and the opening in the second transportation vehicle could be mutually formed such that vertical displacement between the free end of the connection member and the opening is prevented, but pivotable displacement between the connection member and the opening is permitted. Different solutions are sketched in the detailed description below and in the figures, but the person skilled in the art should be able to find other suitable arrangements.

To improve the safety of the system, different safety mechanisms could be provided. In one embodiment the second transportation and/or the first transportation vehicle could comprise a safety mechanism to prevent the connection members from being disconnected while the transportation unit is in the process of being transferred between the first and second transportation vehicles.

In one embodiment, the safety mechanism could also be formed to prevent the two transportation vehicles from moving away from each other in a direction which is parallel to the longitudinal axis of the transfer surfaces. In this way, when the transportation unit is pushed or pulled from one transportation vehicle to the other one, the two transportation vehicles cannot slide away from each other.

In one embodiment, one of the transportation vehicles could comprise drag/push facilities with actuators for dragging/pushing the transportation unit between the transportation vehicle and another transportation vehicle.

In one version, the safety mechanism could have two positions, a first position where the connection member is in its second position and where the transportation unit is prevented from displacing in a direction parallel to the transfer surfaces, and a second position where the connection member is in its second position, where the connection between the connection member and the two transportation vehicles is locked and where the transportation unit is able to slide between the first and second transportation vehicles. In this way, the connection member is prevented from being disconnected during the transfer of the transportation unit. In a similar manner, it could be imagined that the safety members is arranged such that it is not possible to slide the transportation unit between the two units unless the connection member has been locked.

In one embodiment, the safety mechanism could be locked in its second position and prevented from moving to its first position as long as the transportation unit is not located properly on the first or second transportation vehicle.

While the invention as such relates to an entire system which makes it possible to transfer a transportation unit from one transportation vehicle to another, the scope of protection of the current specification should also relate to transportation vehicles specifically arranged to provide the functions which would make it possible to use with the system described above. In particular, the scope of protection should extend to a transportation vehicle according to claim 15.

In one embodiment, one of said transportation vehicles comprises a levelling system which can control the level of the transportation surface of the transportation vehicle. One example of such a system is a system which controls the springs/suspension of the transportation vehicle. As the transportation unit is transferred, the weight distribution will change and the transportation vehicle will tilt to one or the other side. In the case where the transportation vehicle comprises a levelling system, the levelling system can be used to prevent too much tilt during the transfer. In one embodiment, the levelling system comprises a level sensor to detect the actual level of the transportation surface and a control system to control actuators which are arranged to adjust the level of the transportation surface.

It should be emphasized that the term "comprises/comprising/comprised of" when used in this specification is taken to specify the presence of stated features, integers, steps or components but does not preclude the presence or addition of one or more other features, integers, steps, components or groups thereof. For example, in claim 1, it is stated that the aligning mechanism comprises two connection members. However, according to the understanding of the word comprises, this could include more than two connection members.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 is a rear top perspective view of a first embodiment of a transportation unit arranged on a railcar, and a truck arranged beside the railcar,
fig. 2 is a rear top perspective exploded view of figure 1 showing that the transportation unit comprises a standard ISO shipping container secured to a frame and that the railcar has a frame mounted on its transportation surface with rails for cooperating with the frame of the transportation unit,
fig. 3 is a top view of fig. 1 and 2, where an alignment device on the truck is attached to the railcar nearest to the front end of the railcar,
fig. 4 is a further exploded rear top perspective view of the embodiment shown in fig. 2, this figure showing the frame on the railcar, the load surface of the truck, with truck adapter units mounted on the truck, each unit having alignment device and dragging/pushing facilities for dragging/pushing the transportation unit in a transverse direction relative to the centre axis of the truck,
fig. 5 is a perspective view obliquely from above, of the frame of the transportation unit shown in fig. 2, according to the invention suited to be attached to the bottom of a standard shipping container,
fig. 6 shows the same as fig. 5, but seen obliquely from below,
fig. 7 shows a top view of the embodiment shown in fig. 5,
fig. 8 is a side view of the embodiment shown in fig. 5,
fig. 9 is an end view of the embodiment shown in fig. 5,
fig. 10 is a perspective detail view of a corner of the first embodiment of the frame shown in fig. 5, showing the corner pins used to lock a standard shipping container to the frame,
fig. 11 is an oblique perspective top view of a standard 40' ISO shipping container attached to the frame shown in fig. 5
fig. 12 is an oblique perspective bottom view of fig. 11,
fig. 13 is a perspective detail bottom view of a corner of the frame shown in fig. 5, showing the channel with a downwardly facing sliding surface, and a lower portion of the channel having a reduced width compared to the rest of the channel,
fig 14 is a perspective detail top-view of a corner of the frame shown in fig. 5, showing displaceable locking pins for securing the standard shipping container to the frame,
fig. 15 is a perspective top view of a first embodiment of a frame suited for attachment to a standard transportation vehicle, vessel, deck etc,
fig. 16 is a partial perspective top view of one end of the frame shown in fig. 15, showing a rail with an upwardly facing sliding surface, vertical locking unit to prevent vertical displacement of a transportation unit placed on the frame, and releasable transverse locking means to avoid unauthorized relative sideways displacements of a transportation unit placed on the frame,
fig. 17 is a perspective detail top view of the first, spring loaded vertical locking unit, where a top portion of the rail and the sliding surface are hidden,
fig. 18 is a perspective detail top view of the first, spring loaded vertical locking unit shown in fig. 17 with an extra plate removed to show the internal details of the mechanism,
fig. 19 is a perspective view of the frame of the transportation unit, the frame of the railcar and the two truck adapter units attached to a truck, said units showing an alignment device for alignment of the rails of the frame on the railcar and the rails on the truck, and with a pull/push unit to pull/push the transportation unit,
fig. 20 is a detail perspective view of the detail XX defined in fig. 19, showing the function of the alignment device,
fig. 21 is a detail perspective view of the detail XXI defined in fig. 19, showing the rails of the truck and the rails of the railcar, prior to activating the alignment device,
fig. 22 is a detail perspective view of the vertical locking mechanism and the transverse locking mechanism of the frame mounted on the railcar,
fig. 23 is a detailed perspective view of figure 22 where a portion of the frame has been removed to show the transverse locking mechanism in more detail,
fig. 24 is a perspective detail view of detail XXIV defined in fig. 19, showing a detail of a truck adapter unit comprising a rail comprising a sliding surface, also showing a support leg, an alignment device comprising a displaceable pin, a displaceable locking pin, for engagement into the transverse locking mechanism shown in fig. 22, and a pull/push mechanism,
fig. 25 a-c schematically show the unique form of the rails/channels which prevent jamming when the rails/channels are misaligned, and
fig. 26 a-b schematically shows how the alignment device is formed to allow pivoting motion between two sets of rails.

### Detailed description of the embodiments

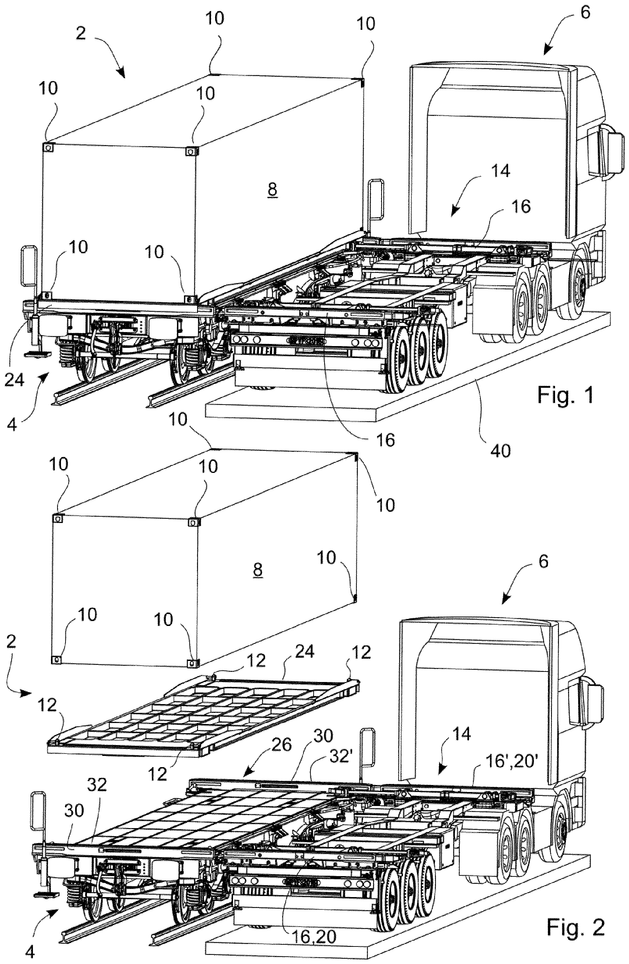

Fig. 1 is a rear top perspective view of a first embodiment of a transportation unit 2 comprising a standard freight container 8 attached to a frame 24. Said transportation unit is arranged on a first transportation vehicle 4, in this embodiment a railcar 4. A second transportation vehicle 6, in this embodiment is a truck 6, is arranged beside the railcar such that the transportation unit can be transferred to the truck and then further transported by the truck.

As it appears, the truck 6 is placed parallel with the railcar 4. The freight container 8 is in this embodiment a standard ISO 40' shipping container 8, defined by a length, a width and a height where the length is greater than the width and height. The corners of the freight container 8 comprise facilities 10 for receiving locking pins 12 (c.f. also fig. 2, fig. 3 and fig. 14) to secure the freight container 8 to the frame 2. In the current embodiment, the facilities for receiving locking pins are standard corner fittings as defined by ISO Standard 1161.

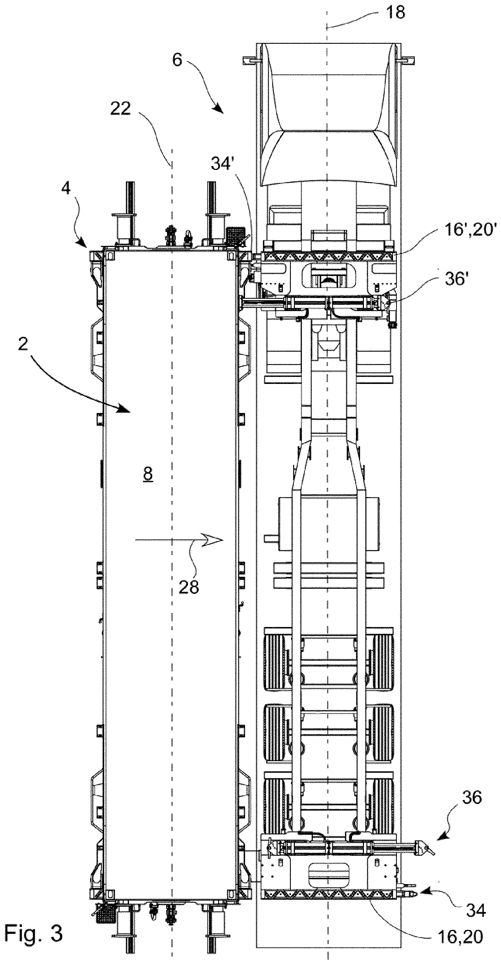

The truck 6, comprises a load surface 14 with two parallel and spaced apart rails 16 arranged perpendicular to the longitudinal axis 18 (c.f. fig. 3) of the truck 6, said rails 16 comprising upwardly facing sliding surfaces 20. The longitudinal axis 18 of the truck 6 is parallel with the longitudinal axis 22 of the railcar 4 (c.f. fig. 3). The longitudinal axes of the truck and the railcar are aligned with the driving direction of the truck and railcar respectively.

Fig. 2 is a top rear perspective view, somewhat exploded, of the embodiment shown in fig. 1 of the transportation unit 2, embodied as a frame 24 upon which the standard freight container 8 is supposed to be secured using the facilities 10 and the locking pins 12, indicated in the corners of the frame 24.

Fig. 2 also shows the load surface 26 of the railcar 4, and the load surface 14 of the truck 6, as shown in fig. 1, for transferring the transportation unit 2 with the container 8, in a transverse direction 28 to the longitudinal axis 18, 22 (c.f. fig. 3) of the truck and the railcar 4. The load surface 26 of the railcar 4 comprises parallel rails 30 arranged perpendicular to the longitudinal axis 22 of the railroad wagon 4. The upper surfaces of the rails 30 comprise sliding surfaces 32.

It should be understood, that the above embodiment of the transportation unit 2, is suited to be attached to standard freight units, e.g. a standard shipping container 8, which do not in advance comprise facilities to cooperate with the rails. However, in another embodiment of the transportation unit 2, the freight unit could comprise integrated facilities to cooperate with the rails 16, 16' on the truck 6, the rails 30, 30' on the railcar 4 or to cooperate with rails arranged on another transportation vehicle. For example, a custom shipping container could be provided where the integrated bottom surface of the shipping container was provided with integrated means for cooperating with rails.

Fig. 3 is a top view of fig. 1 and 2, showing the rails 16 with the sliding surfaces 20 on the rails 16 on the load surface 14 of the truck 6. Further is shown alignment means 34, 34' on the truck 6 used to align the rails 16 on the truck 6 and the rails 30 on the load surface 26 of the railcar 4. In fig. 3, the alignment device 34' on the front of the truck 6 is engaged with the railcar 4 while the rear alignment device 34' is not engaged with the railcar 4. This is just for illustration purposes, in an actual case, during the operation of transferring a transportation unit from the railcar to the truck both alignment devices would be engaged.

Furthermore, for illustration purposes, the alignment device on the outer rear corner of the truck has been extended for illustration purposes. In an actual situation, only the alignment devices on the side of the truck facing the railcar would be extended.

Fig 3 also shows drag/push devices 36, 36' on the truck 6 for transferring/dragging the transportation unit 2 in the transverse direction 28 to the two longitudinal axes 18, 22 from the railcar 4 to the load surface 14 on the truck 6.

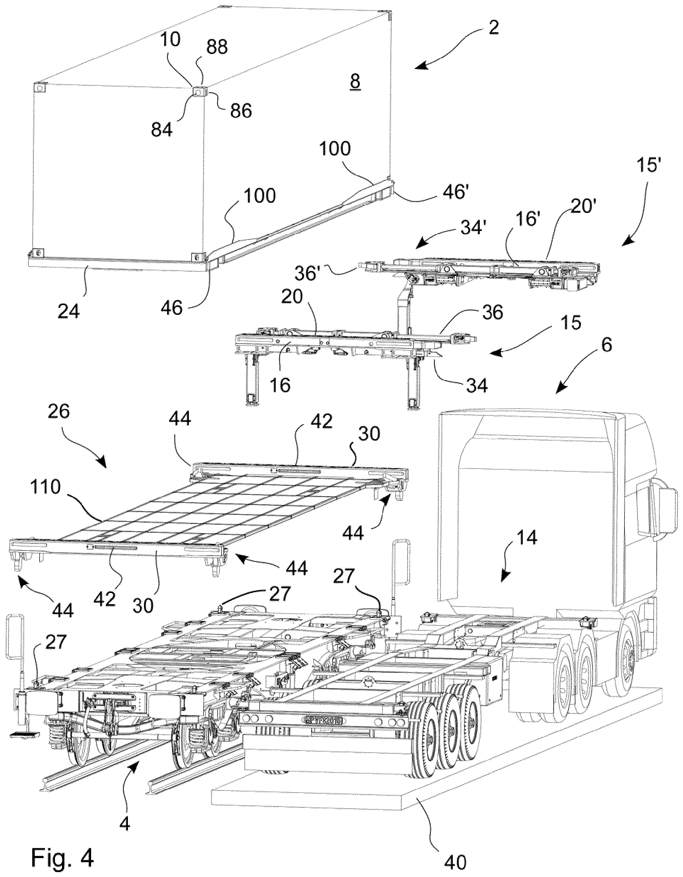

Fig. 4 is a further exploded top rear perspective view of the embodiment of the transportation unit 2 shown in fig. 1 and 2, the railcar 4, the load surface 26 of the railcar 4, the truck 6, and the load surface 14 of the truck 6. As can be seen from figure 4, a frame 110 is fastened to the load surface 26 of the railcar. The rails 30 are arranged on this frame 110. Openings (not shown) on the bottom surface of the frame 110 engage with standard locking pins 27 placed at the corners of the railcar. In this way, a standardly available railcar with standard means for mounting standard shipping containers via corner fittings can be converted to the current system just by adding the frame 110. No additional modifications need to be made to the railcar. However, in another embodiment, a railcar could be provided which was custom built with rails and locking mechanisms directly integrated into the construction of the railcar.

Likewise, in the current embodiment, a rear and front truck adapter unit 15,15' are attached to a standardly available truck. In the current embodiment, the truck chassis is of the kind known as a gooseneck chassis. Each truck adapter unit in the current embodiment is provided with an alignment device 34, 34', a dragging/pushing device 36, 36' for dragging/pushing the transportation unit 2 in the transverse direction 28 relative to the longitudinal axis 18, 22 of the railcar 4 and the truck 6 as well as rails 16,16' with upwardly facing sliding surfaces 20,20'.

By providing such truck adapter units 15, minimum modifications need to be made to a standard truck to enable the truck to be used in the system according to this specification. If the truck should no longer need to be used together with the system of the current invention, then the truck adapter units can be removed thereby restoring the truck to its standard format. However, as with the railcar, it could also be imagined that a truck could be provided where the different mechanisms and functions required for the current system could be integrated directly into the structure of the truck.

As it also appears from fig. 4, the truck adapter units 15,15' comprises pivotally mounted, length adjustable stands or support legs 38, to be brought into contact with the ground surface 40, to support the rails 16 during the transfer of the transportation 2 unit from the railcar 4, to the truck 6. In figure 4, three of the support legs are folded down and one support leg is folded up for the sake of illustration. In an actual use situation, it would typically be the case that the support legs on the side of the truck facing the railcar would be folded down while the others would be folded up. It should be mentioned that in other embodiments of the system, it could be imagined that the support legs were not needed.

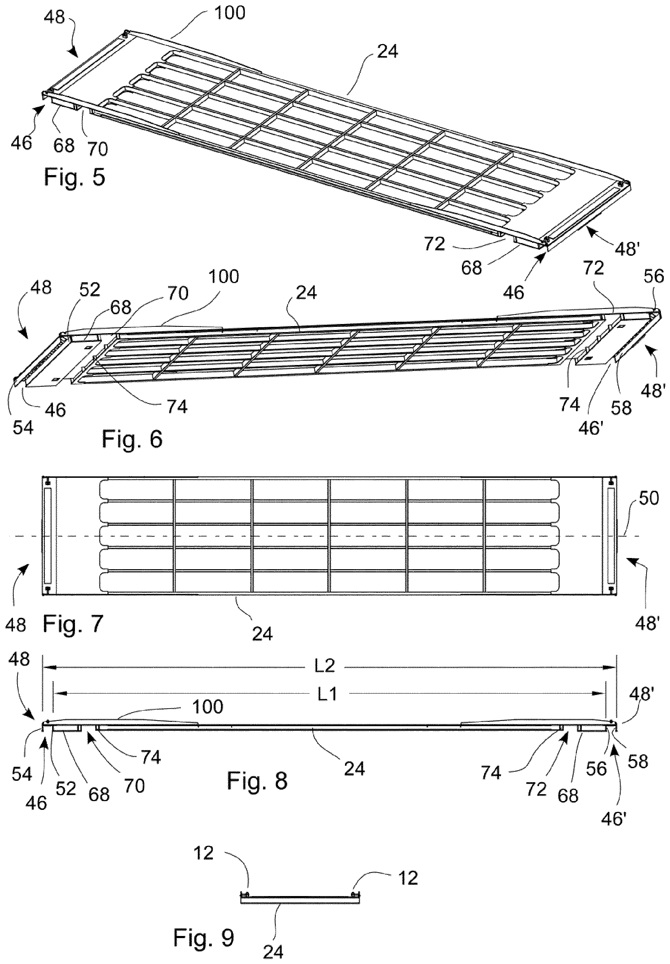

As indicated in fig. 4, but shown in more detail in the following figures 5, 6, 7, 8, 10, 11, 12, 13 and 14 the transportation unit 2 comprises a channel 46, 46' at each end, orientated transversely to the longitudinal axis 50 of the transportation unit 2, and in the current embodiment, the channels 46, 46' are located in alignment with the facilities 10 for receiving locking pins 12 of the shipping container 8.

As it also is indicated in fig. 4, the frame 110 mounted on the railcar 4, comprises vertical locking mechanism 42 on each rail and transverse locking mechanisms 44 in each corner. Both locking mechanisms shall be disclosed in more detail later. It should be noted that the locking mechanisms on the railcar are all passive locking mechanisms with no requirements for power. Furthermore none of the mechanisms need to be manually operated. The truck adapter units on the other hand incorporate hydraulic actuators which power the different functions. In this way, the railcar does not have to be supplied with any power and all the power functions come from the truck which is equipped with power already due the presence of the engine. It is therefore relatively easy to add hydraulic power to the truck. Likewise, the transportation unit is also completely passive with no power requirements.

In the following the transportation unit 2 is described in more detail with reference to figures 5 to 14.

Figure 5 is a perspective view obliquely from above, of a first embodiment of a frame 24 of the transportation unit 2 shown in fig. 2, according to the invention. The frame 24 is adapted to be attached to the bottom of a standard ISO shipping container 8 by locking pins 12 (corner pins) to be introduced into the receiving facilities (corner fittings) 10 located in the corners of the standard freight unit, e.g. a standard shipping container 8.

The frame 24 of this embodiment comprises a first and a second mutual parallel, downwards facing open channel 46, 46' arranged in the bottom of the first transportation unit 2, located (respectively) at the first end 48 and the second end 48' of the frame 24. The channels are arranged perpendicular to the longitudinal axis 50 of the frame 24. In this embodiment, the channels are U shaped in cross section with two side edges and a bottom edge.

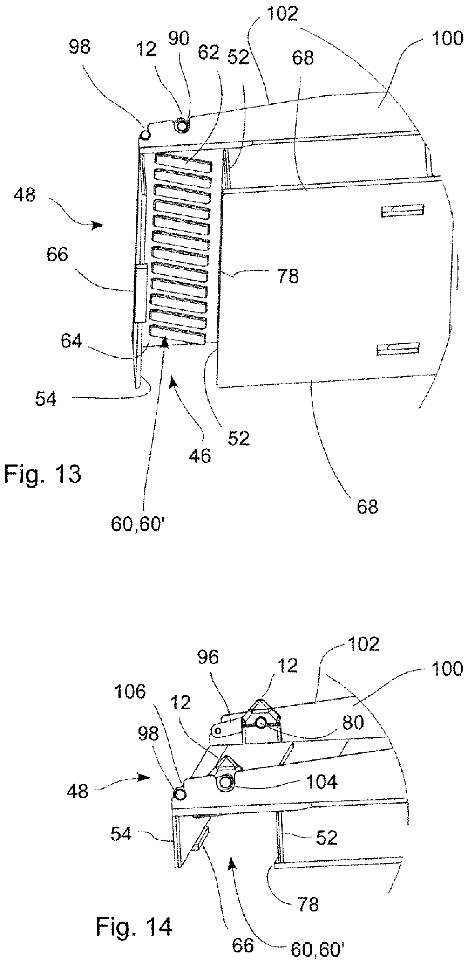

The first and the second downwardly facing channel 46, 46' each comprises at least one downwardly facing sliding surface 60, 60' (fig. 13), said downwardly facing sliding surfaces 60, 60' consisting in the shown embodiment of mutually spaced plate shaped bars 62 on the downwardly facing side 64 of the channels 46, 46', said sliding surfaces 60, 60' being designed to cooperate with the upwards facing sliding surfaces 20, 20', 32, 32' on the rails 16, 16', 30, 30' on the load surfaces 14, 26 on the truck 6, and the railroad wagon 4. In the current embodiment, the plate shaped bars 62 on the sliding surface of the channels is chosen as a material which has a low coefficient of friction with sliding blocks placed on the sliding surface of the rails.

In the shown embodiment of the frame 24, the first channel 46 has a first downwardly extending flange 52 (c.f. fig. 6, fig. 8, fig. 13 and fig. 14) and a second downwardly extending flange 54, and the second channel 46' has a third downwardly extending flange 56 and a fourth downwardly extending flange 58.

The first downwardly extending flange 52 of the first downwardly facing channel 46 is located along the channel side closest to the second channel 46', the third downwardly extending flange 56 of the second channel 46' is located along the channel side closest to the first channel 46. The second downwardly extending flange 54 of the first channel 46 and the fourth downwardly extending flange 58 of the second channel 46' are located on the distant side to the other channel, as it appears from fig. 6 and fig. 8, but more clearly from fig. 13 and fig. 14.

In the current embodiment, at both of the inwardly facing surfaces of the downwardly extending flanges 52, 54, 56, 58 in each of the respective channels 46, 46' are arranged as a guiding and sliding surface. By inwardly facing surface is meant a surface which faces the centre of the channel.

It should be noted that in the current embodiment, the sides of the channels are formed as straight flanges which extend downwardly along the sides of the channels. These flanges contribute to providing strength to the channel. In other embodiments, it could be imagined that other structures are provided instead of flanges. For example a box beam or an I-beam could be arranged on either side of the channel. Or a simple flange could be arranged on one side of the channel and a more complex beam could be arranged on the other side of the channel. In effect, a beam is provided on either side of the channel and each beam has an inwardly facing surface.

In the current embodiment, the distance between the inwardly facing surface of the first downwardly extending flange 52 and the inwardly facing surface of the third downwardly extending flange 56 is L1 and the distance between the inwardly facing surface of the second downwardly 54 extending flange and the inwardly facing surface of the fourth downwardly extending flange 58 is L2 as shown in figure 8.

In order to optimize strength and the total height of the system, the lengths L1 and L2 are chosen such that the channels are placed over the typical locations of the corner pins on a railroad wagon. Likewise the channels are placed underneath the typical location of the corner fittings of a standard shipping container. The distances are provided based on ISO Standard 668 (Shipping containers) and 1161 (corner fittings).

According to the standard, the distances between the centres of the corner fittings of standard ISO shipping containers are as follows:
40' container - 11.985 m
30' container - 8.918 m
20' container - 5.853 m
10' container - 2.787 m

According to ISO standard 1161, the hole dimension on a corner fitting is 124mm and as such the distance L1 is chosen to be less than the following values.
40' container: 11.985-. 124=11.861
30' container: 8.918 - .124=8.794
20' container: 5.853 - .124=5.729
10' container: 2.787 - .124=2.663

Likewise, the distance L2 is chosen to be greater than the following values.
40' container: 11.985 + .124=12.109
30' container: 8.918 + .124=9.042
20' container: 5.853 + .124=5.977
10' container: 2.787 + .124=2.911

The frame 24 (or the transportation unit) will be designed to fit with either 10', 20', 30' or 40' containers. As such, the above distances should define four distance pairs and should not define 8 independent distances.

By choosing these dimensions, two benefits will be achieved. Firstly, the rail on the railroad wagon can be placed directly over the corner pins on the railroad wagon. This will minimize the total height of the system. Secondly, standard shipping containers are optimized in strength such that the loads on the container are transferred to the corner fittings. By placing the channel underneath the corner fittings, the frame itself does not have to be as strong since the container itself will bear most of the loads.

As it appears in fig. 5, fig. 6, fig. 8 and more clearly in fig. 13 and fig. 14, the bottom of the frame 24 comprises two long bottom side edges. Near either end of the bottom side edges, is a straight portion 68. The purpose of these straight portions is to provide support for the container when being used on a transfer vehicle as described in applicants co-pending application WO 2014/203024 which is incorporated in this specification by reference. In such a transfer vehicle, means are provided for allowing the container to displace along its longitudinal axis. In the truck and railroad wagon as shown in the figures, rails are provided for allowing the transportation unit to be transferred in a direction transverse to the longitudinal direction of the transportation unit. A transfer vehicle as disclosed in WO 2014/203024, has a similar system as disclosed on the truck to allow transverse transferring of a container from a railcar to the transfer vehicle. However, in addition, means are provided to release the connection between the channels and the rails and then allow the container to displace longitudinally on the transfer vehicle.

In the embodiment of WO 2014/203024, the rails are lowered and the transportation unit is therefore also lowered until the transportation unit's side bottom edges come into contact with wheels arranged along the side edges of the transfer vehicle to support the bottom side edge of the transportation unit. The wheels are arranged with their axis of rotation perpendicular to the longitudinal axis of the transportation unit. The long bottom side edges of the transportation unit therefore need to be arranged such that they can be supported by the wheels. In general, it is necessary to have a straight edge portion which is lower than the other portions of the long bottom side edges and which has a length which is greater than the distance between the centres of two wheels. Furthermore, in order to balance the transportation unit as well as possible, it is best to have two such straight edge portions along each bottom side of the transportation unit, one located near each end of the transportation unit.

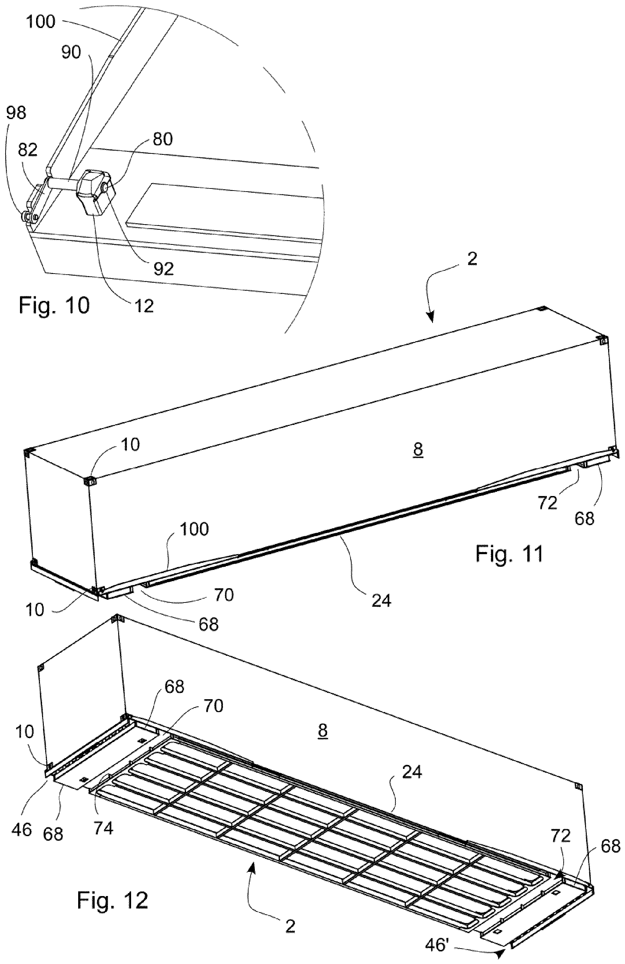

It also appears from fig. 6 and 12, that the transportation unit 2 next to the straight edge portions 68, comprises third and fourth transverse channels 70, 72, parallel with the first and the second downwardly facing open channels 46, 46', the facing sides of which comprises spaced protrusions 74 for cooperation with parts of the drag and push devices 36, 36' of the truck 6 as will be described later.

As it most clearly appears from fig. 13 and 14, the bottom 76 of the two mutual parallel, downwardly facing open channels 46, 46' is narrower than the middle of said channels in a cross section perpendicular to the longitudinal axis of the respective channel 46, 46'. This is in the shown embodiment of the transportation unit 2 provided in that the lower edge of the first and second downwardly extending flanges 52, 56 have a protrusion flange 78 extending inwardly towards the centre of the channels 46, 46', and further that the lower edge of the second and fourth downwardly extending flanges 54 and 58 over a portion has a protruding horizontal flange 66 protruding into the channels 46, 46'. It should be stated, that the protrusion 78 does not necessarily need to extend along the whole channel sides 52, 56.

To secure a standard cargo unit, e.g. a standard shipping container 8 to the frame 24, the top surface of the frame, just above the channels 46, 46' is provided with upwardly extending locking or corner pins 12, as it appears in fig. 7 but more clearly in fig. 10 which is a partial perspective view of a corner portion of the frame 24 and fig. 14 which is a partial perspective view of one end 48 of the frame 24. The locking pins 12 are located on the frame 24 to cooperate with the receiving facilities 10 on a standard freight unit, e.g. a freight container 8 (fig. 1 ff.), and the standard locking pins comprises a hole 80 to receive a locking mechanism 82.

The receiving facilities 10 (corner fittings) on the container comprise openings 84, 86, 88 in the averted sides relative to the container, as it appears in fig. 4, this means that the bottom of the receiving facilities 10 comprises an opening 88 for receiving the locking pin 12.

As it appears from fig. 10 and fig. 14, the frame 24 comprises a locking mechanism 82, which in the shown embodiment consists of a pin 90, the first end 92 of which is suited to be introduced into the hole 80 of the corner pin 12, and the second end 94 of which comprises an orthogonally extending plate shaped arm 96, the end of which comprises a cam 98 extending on the side facing away from the pin 90.

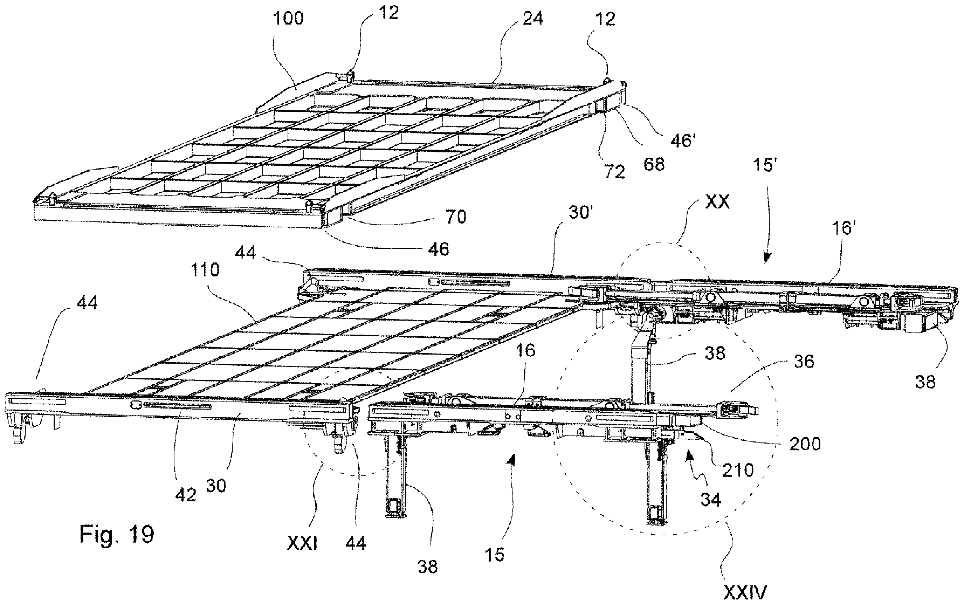

As it also appears from fig. 1, 2, 4, 5, 6, 8, 10, 11, 12, 13, 14, and 19, the frame 24, comprises longitudinal flanges 100 extending from each corner of the frame. As it also appears, the flanges 100, have a short tapered portion 102 nearest to the corners of the first transportation unit 2, which comprises a first recess 104 located in alignment with the holes 80 in the locking pins 12, and a second recess 106, nearest to the ends 48, 48' of the first transportation unit 2 as a seat 106 for the cam 98 on the arm 96 of the locking mechanism 82. As it appears from fig. 14, the locking mechanism 82 is situated in a locked position, with the cam 98 located in the recess 106, nearest to the end 48. The adjacent sides of the arm 96 and the flange 100 will block the pin 90 from being displaced out of its position in the hole 80 in the locking pin 12.

The recesses 104 and 106 are cooperating with the locking mechanism 82, the pins 12 and the facilities 10 for receiving the pins on a standard freight unit/the standard freight container 8, as follows.

The locking mechanism 82 is released by turning the arm 96 upwards from the position where the cam 98 is located in the seat 106 to a vertical position wherein the arm 96 is located to pass the first take out 104 in the flange 100, and then retract the pin.

The container 8 is hereafter arranged in the frame 24, with the locking pins 12 introduced in the holes 88 in the corner fittings 10 in the container 8 for receiving the locking pins 12. Subsequently the pins 90 are introduced into the holes 86 in the corner fittings 10 and into the hole 80 in the locking pin 12, and the arm 96 with the cam 98 of the locking mechanisms 82 is turned sidewise, so the cam 98 is located in the second recess 106 in the flange 100, and the pin 90 is locked, and so the container will be locked to the frame 24. This is however just one mechanism for locking the container to the frame. In another embodiment, a standard twist lock could be used, or some other entirely different locking mechanism could be provided.

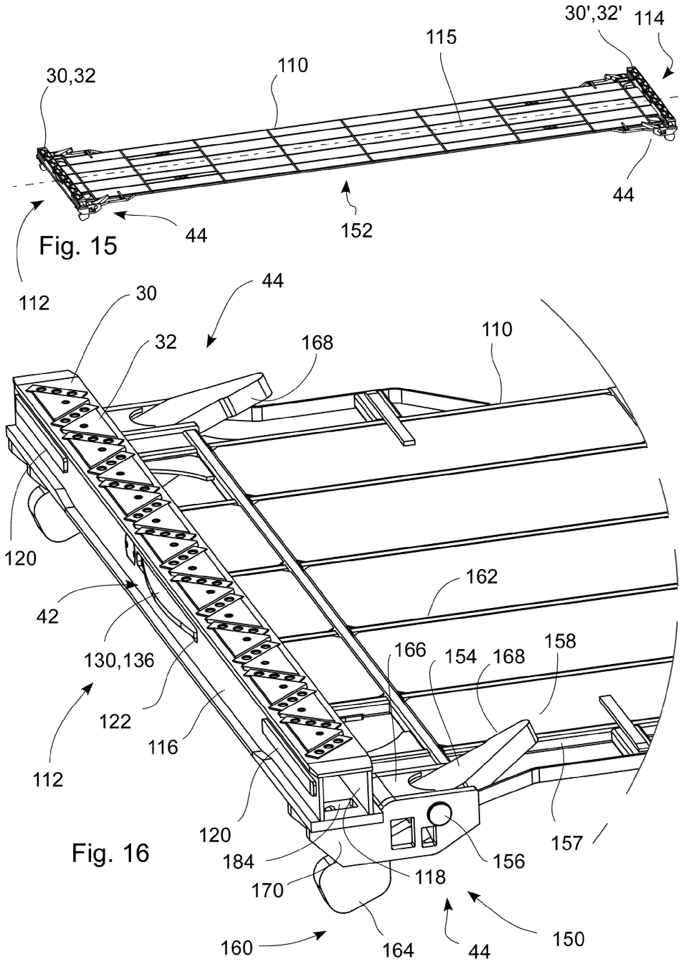

Fig. 15 is a perspective top view of a first embodiment of the frame 110 arranged on the load surface 26 of the first transportation vehicle 4. In this embodiment, the frame is suited for attachment to a standard railcar 4, as shown in fig. 1, 2 and 3. The frame 110 has a substantially rectangular shape with a first end 112 and a second end 114, and with rails 30, 30' at either end, extending perpendicularly to the longitudinal axis 116 of the frame 110. The upwards facing sides of the rails 30, 30' comprise sliding surfaces 32, 32'. Transverse locking mechanisms 44 are located at the corners 118, 120, 122, 124 of the frame 110. The transverse locking mechanisms 44 serve to block for undesired relative transverse displacements of the transportation unit 2 when the transportation unit is arranged on the frame 110.

In fig 16 is disclosed a more detailed perspective top view of one end of the frame 110 shown in fig. 15. The two ends of the frame are essentially identical and therefore only one side is described in detail.

The figure shows a rail 30 with an upwardly facing sliding surface 32, a spring loaded vertical locking unit 42 arranged to prevent vertical displacement of a transportation unit when such a unit is arranged on the frame, and releasable transverse locking means 44 to avoid unauthorized sideways displacement of the transportation unit when such a unit is arranged on the frame.

The two rails 30, 30' are arranged mutually parallel and perpendicular to the longitudinal axis 115 of the frame 110. Each rail 30, 30' has a top surface arranged as an upwardly facing sliding surface 32, 32'. In the current embodiment, the sliding surface is arranged with a number of individual triangular sliding tiles screwed to the top surface of the rail. The tiles are made of a material which has a low coefficient of friction with the sliding surface of the channel of the transportation unit. The tiles can furthermore be exchanged when the tiles are worn. Likewise, dirt and other foreign substances can be trapped in the spaces between the tiles.

Furthermore, in the current embodiment, each rail 30, 30' has a first sideways facing surface 116, 116' and a second sideways facing surface 118, 118'. In the current embodiment, the sideways facing surfaces 116,116', 118,118' are arranged as guiding and sliding surfaces which cooperate with the inwardly facing sides of the channels of the transportation unit to guide the transportation unit in the longitudinal direction.

In order to compensate for misalignment between the channel and the rail, the rail is not as wide as the channel. This allows for a certain amount of misalignment without causing a jam. As it appears in the embodiment shown in fig. 16, the first sideways facing surfaces 116, 116' are arranged with extra sliding blocks 120, 120' at the ends of the rails 30, 30' and are arranged to cooperate with the second 54 downwardly extending flange and the fourth downwardly extending flange 58 of the channels 46, 46'. Likewise, the second sideways facing surface 118,118' are also arranged with sliding blocks which cooperate with the first and third 52,56 downwardly extending flanges of the channels. Sliding blocks are also arranged on the second sideways facing surface at either end of the rail.

The presence of these sliding blocks results in, that the rails 30, 30' along their longitudinal direction are thickest at the ends, and thinner at the middle. This enables a certain compensation for oblique angles and to compensate to some extent for a slight angle between the channels on the transportation unit and the rails during the transfer, thereby preventing the transportation unit 2 from getting stuck, if the channels 46, 46' on the first transportation unit 2 and the rails 30, 30' on the first transportation vehicle 4 and/or the rails 16, 16' on the second transport vehicle 6 (the truck) are not properly aligned, or if the drag/push system 36, 36' does not work totally synchronously.

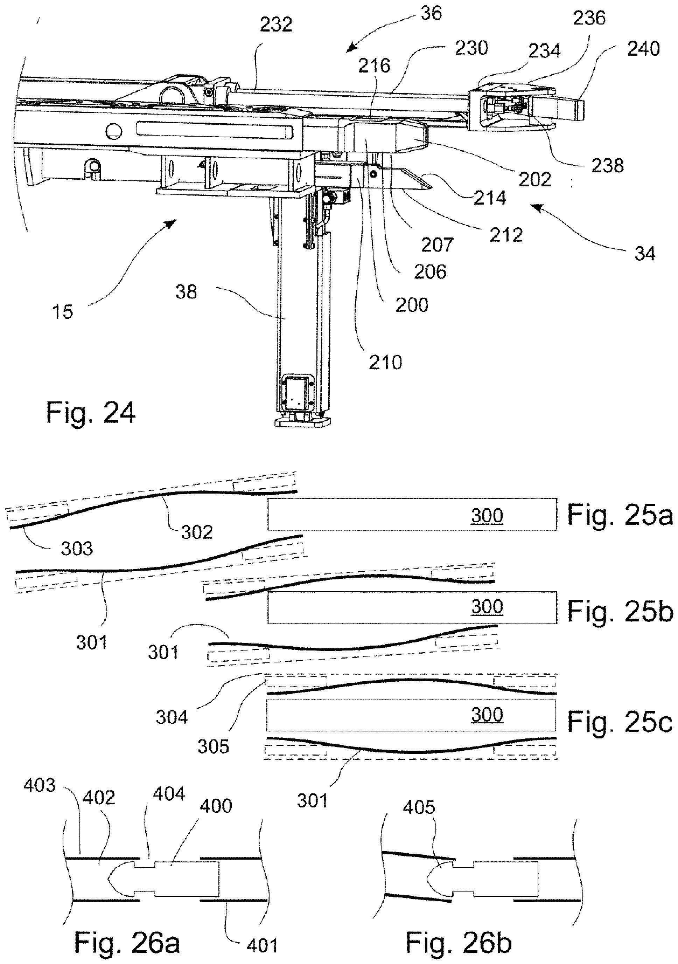

At the beginning of the transfer one end of the channel will be in contact with one end of the rail. At this time, the channel is able to pivot slightly without jamming on the rail. At the end of the transfer, the channel will be in contact with both ends of the rail, and therefore also the sliding blocks at each end of the rail will be in contact with the sides of the channel. This ensures for a more accurate final location of the first transportation unit 2 on the load surfaces 26, 14. In another embodiment, it could be imagined that the sliding blocks were arranged on the inside surface of the channels such that the channels were narrower at their ends than at the centre. This is schematically illustrated in figures 25 a-c.

As it appears from the embodiment shown in fig. 16, the first sideways facing surfaces 116, 116' have a slit 122, 122', and the second sideways facing surfaces 118, 118' have a slit 123, 123'. The slits 122, 122', 123, 123' are located in the centre of the rail below the sliding surface 32, 32'. As it also appears, a portion 136,136' of the spring loaded vertical locking mechanisms 42, 42' protrudes through the slits outside the vertical planes bounding the rails 30, 30', which shall be described in more detail below.

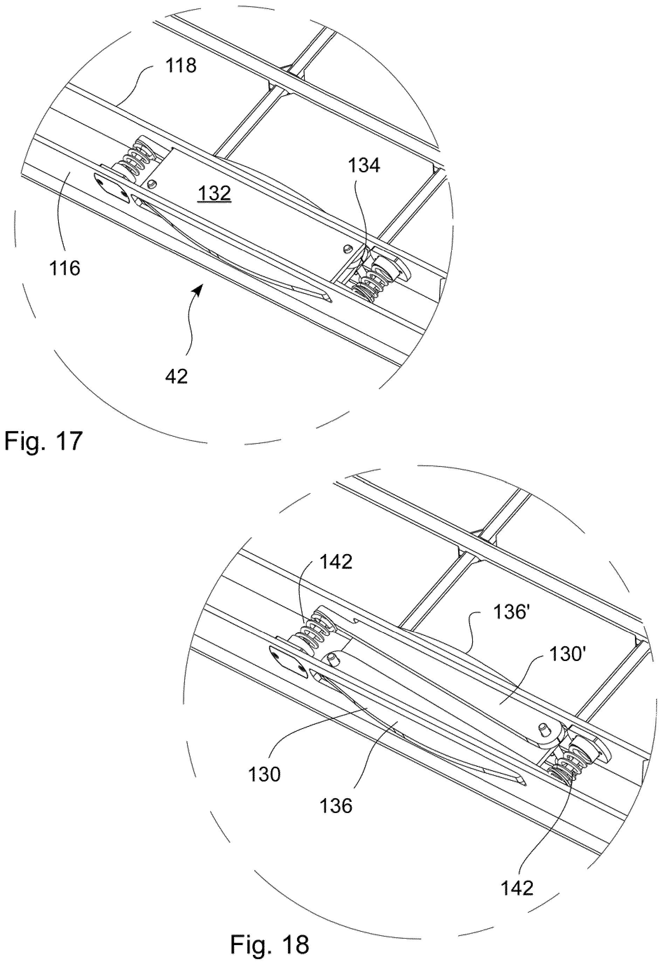

An embodiment of the spring loaded, vertical locking mechanism is disclosed in more detail in figures 17 and 18. The spring loaded vertical locking mechanism 42 comprises horizontally displaceable spring loaded locking plates 130, 130', guided and retained between an upper and a lower guide plate 132, 134 secured to the rails 30, 30'. The locking plates 130, 130' have a first end 138, 138' which is pivotally attached to the guide plates 132, 134.

Each of the second ends 140, 140' of the locking plates 130, 130' is connected to a spring 142, 142' which presses the respective locking plates 130, 130' in the direction of the slits 122, 122', 123, 123' in the first and the second sideways facing surfaces 116, 116', 118, 118'. The locking plates comprises in the second ends a portion extending behind the bounding of the slits 122, 122', 123, 123' which by the springs 142, 142' is brought into abutment of the sideways facing surfaces 116, 116', 118, 118' in the locking plates active position, and limits the extent of the protruding portions 136, 136'.

The vertical locking means 42, 42' cooperates with the horizontal flange 66 on the lower edge of second and the fourth downwardly extending flange 54, 58 in the channels 46, 46' of the transportation unit, as the protruding portions 136, 136', in case of a relative vertical directed displacement between the transportation unit 2, and the rails 30, 30', will come into contact with the horizontal flanges 66, and therefore stop the vertical displacement.

The spring loaded guide plates also stabilize the position of the transportation unit in the longitudinal direction of the transportation unit during travel.

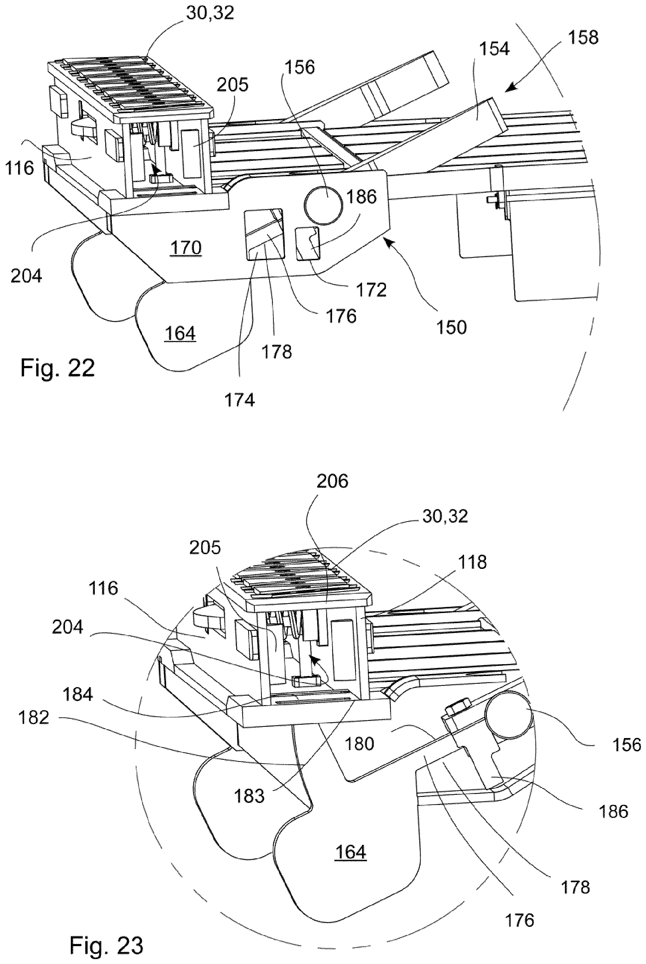

As it also appears from fig. 16, the frame 110 comprises releasable transverse locking mechanisms 44 which serve to block undesired relative transverse displacement of the transportation unit relative to the frame. The transverse releasable locking mechanisms 44 are disclosed in more detail in fig. 22 and fig. 23. As it appears from fig. 15 and fig. 16, the locking mechanisms 44 are located in a portion 150 on the outside long sides 152 of the frame 110, close to the adjacent sides 118, 118' of the rails 30, 30'.

Each of the locking mechanisms 44, comprises a pivotal locking member 154 pivotally mounted in the portion 150 by a shaft 156. The pivotal locking member 154 comprises a first end 158 and a second end 160. The pivotal locking member 154 is in the figures 15, 16, 22 and 23 shown in its active position, wherein the first end 158 is positioned in a level above the top surface 162 of the frame 110. The first end 158 is held in this position thanks to a counter weight portion 164 on the second end 160, the weight of which will cause a torque on the pivotal locking member 154 to push the first end in upwards direction, thus the first ends 158 of the pivotal locking members 154 of the locking means 44, will normally be situated in the active position. The portion 150 comprises an upper wall 166 which limits how much the first end 158 can extend above the top surface 162 of the frame. The first end 158 has a surface 168 facing the longitudinal centre line 115 of the frame 110. The surfaces 168 serve as the contact surface to the outside of the transportation unit 2, and the distance between two opposing surfaces 168 of pivotal locking members 154 located near the same rail 30, 30' corresponds at least to the outside width of the transportation unit 2.

As it appears in fig. 22 the outwardly facing wall 170 of the portion 150, comprises two openings, a narrow opening 172 closest to the shaft 156, and a larger opening 174 between the narrow opening 172 and second sideways facing surfaces 118, 118' of the rails 30, 30'.

As it appears from fig. 23 (where the side wall 170 has been removed for illustration purposes), the pivotal locking member 154 comprises a narrow portion 176, between the first end 158 and the counter weight portion 164 in the second end 160, said narrow portion having a downwards facing straight edge 178, and an upwards facing straight edge 180 having an upwardly extending portion 182 cooperating with a slit 184 in the bottom of the rails 30, 30', the purpose of this shall be explained later. Between the narrow portion 176 and the portion 164 in the second end 160 is located a small downwards extending rectangular portion 186.

The narrow portion 176 of the locking pin 154 is located adjacent to the larger opening 170 in the outwardly facing wall 170 of the portion 150, and the small downwards extending rectangular portion 186 is located next to the narrow opening 172, as it appears from fig. 22.

In fig. 24 is disclosed a partial detail view of an embodiment of a truck adapter unit 15 comprising an alignment device 34 and a drag/push device 36.

The alignment device 34 is in the shown embodiment supported by a pivotally mounted, length adjustable support leg 38 supported on the ground surface 40.

The alignment device 34 comprises a sensor cooperating with the narrow opening 172 in the outwardly facing wall 170 of the portion 150, and the small downwards extending rectangular portion 186 of the pivotal locking member 154. The sensor's registration of the presence of the rectangular portion 186 in the narrow opening 172 indicates that the rails 30, 30' on the load surface 26 of the first transport vehicle 4 are in alignment with the rails 16, 16' on the second transport vehicle 6 and that the transverse locking mechanism is in its locked position.

The alignment device 34,34' comprises a horizontally displaceable bar 200 slideably located inside the rails 16,16' of the truck. The displaceable bar is displaced by an actuator (not shown). The free end 202 of the bar 200 is formed as a truncated pyramid, and is suited to be introduced into an opening 204 formed in the rail of the railcar. The opening 204 is bounded by the first sideways facing surfaces 116, 116', the second sideways facing surfaces 118, 118', the bottom 183 of the rail and the downwards facing side 206 of the top surface of the rail 30 (c.f. fig. 22 and 23).

In the current embodiment, spacer bars 205 are arranged on either side of the opening. The spacer bars are arranged to contact the free end 202 of the bar 200 which is formed as a truncated pyramid in the current embodiment when the bar is inserted into the opening. As the free end is inserted into the opening, the spacer bar will force the bar to be centered in the opening.

Just as the vertically arranged spacer bars 205 center the bar in the opening in the horizontal direction, a horizontally arranged spacer bar (not shown) could also be arranged horizontally just above the bottom 183 of the rail. In this way, as the bar is inserted into the opening, the bottom portion of the free end of the bar will engage with the horizontally arranged spacer bar and "lift" the displaceable bar into the right position. Likewise, a horizontal spacer bar could also be arranged underneath the downwards facing side 206 of the top surface of the rail.

In the current embodiment, the spacer bars are formed as ramps which are welded to the inner sides of the rail. In another embodiment, the spacer bars could be arranged as pins with a circular cross section which are welded in place in through going holes in the sides of the rail. Other possibilities should be obvious to the person skilled in the art.

In this embodiment, the free end of the bar is formed with sloping surfaces to guide the free end of the bar into the right position in the opening. The opposite could also be possible, where the opening is provided with sloping surfaces and the free end of the bar is flat. A combination is also possible. For example, the free end of the bar could be formed as a truncated pyramid, ie with a forward portion which is smaller in diameter than a rearward portion and the opening could be formed with sloping surfaces such that the outwardly arranged portion of the opening is larger in diameter than the inwardly arranged portion of the opening.

In general, in order to secure vertical alignment, in the case where the connection member is a bar extending into an opening, there should be a close fit between the bar and the opening to avoid the two rails moving in a vertical direction with regards to each other.

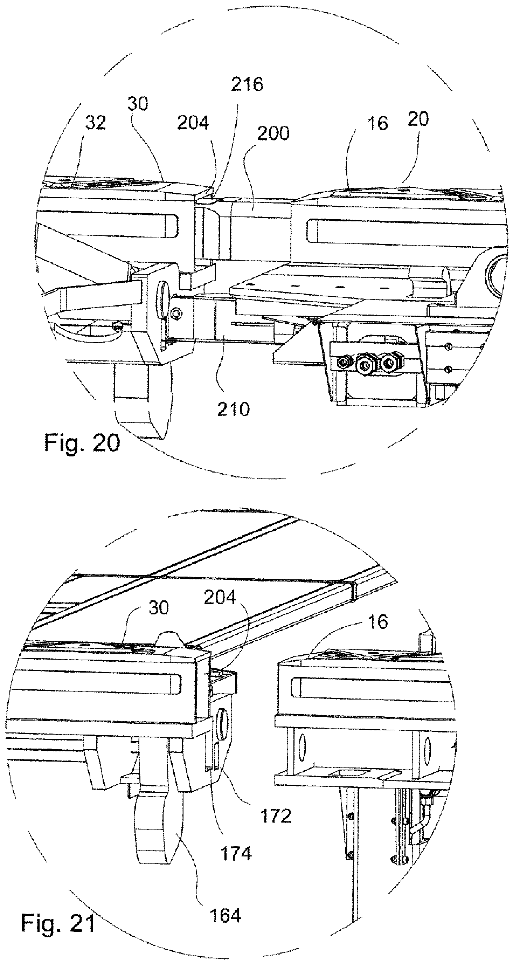

In fig. 20, the bar 200 has been introduced into the opening 204 in the rail. The bottom side 207 of the bar 200 facing the bottom 183 of the rail 30 with the slit 184, comprises an opening (not shown) formed to cooperate with the locking portion 182 on the pivotal locking member 154.

When the bar 200 is sufficiently introduced into the channel 204 (shown in figure 20), the opening in the bottom of the bar and the slit 184 in the bottom side of the rail 30 will be aligned, and the rails 16, 16' are now aligned with the rails 30. A recess 216 in the top surface of the bar 200 allows the two rails to pivot slightly with respect to each other about an axis which is coplanar with the plane of the rails and perpendicular to the rails. This is schematically illustrated in more detail in figure 26.

The alignment device 34, 34' also comprises a second actuator (not shown) and a second displaceable rod 210 for unlocking the transverse releasable locking means 44.

The second displaceable rod 210 has a straight downwards facing edge 212, and a tapered end 214, which is designed to cooperate with the downwards facing straight edge 178 of the narrow portion 176 of the pivotal locking member 154. The second displaceable rod 210 is designed to be introduced through the larger opening 174 in the outwardly facing wall 170 of the portion 150. Pushing the rod 210 into the opening 174 will result in the tapered end 214 engaging the narrow portion 176 of the pivotal locking member 154, causing an initial pivotal movement of the locking member 154 which will displace the upwardly extending locking portion 182 at the second end of the of the pivotal locking member 154, into the aligned opening in the bottom of the bar 200 and the slit 184 in the bottom side 183 of the rail 30, thereby locking the horizontally displaceable bar 200 in the introduced position in the channel 204.

The sensor of the alignment device 34 is able to register that the bar 200 is in alignment with the rails 30, 30'. Furthermore it is also able to register that the locking bar 200 is locked in the channel 204 by the member 182 because the turning of the pivotal locking member 154 also results in the small downwards extending rectangular portion 186 located next to the narrow opening 172 being displaced away from the narrow opening 172. A control unit in the alignment device will subsequently allow the drag/push devices 36, 36' to be activated, and the transfer procedure can proceed.

The drag/push devices 36, 36' on the truck 6, comprise in the embodiment shown in fig. 24, a displaceable drag/push pole 230, in the following named displaceable pole 230, displaced by an actuator 232 in an outwardly and inwardly cycling movement, parallel to the rails 16, 30. The free end 234 of the pole 230 comprises a gripper head 236 with a pivotal arranged gripper mechanism 238. The gripper head 236 is designed to be introduced into the third transverse channel 70 or the fourth transverse channel 72 in the first transportation unit 2, and engage with the protrusions 74 therein.

The gripper mechanism 238 is first rotated to a position as shown in figure 24. The gripper mechanism is then inserted into the channel and then rotated about an axis perpendicular to the load surface such that the gripper mechanism is arranged perpendicular to the displaceable pole. This effectively increases the width of the gripper mechanism which can therefore engage with the protrusions 74 on the inside surfaces of the channels 70,74. The gripper head 236 can then be retracted an amount at least corresponding to the space between to two adjacent protrusions 74. This will cause the transportation unit 2 to be displaced in a transverse direction to the longitudinal axis 22 of the transportation unit towards the truck 6, sliding on the sliding surfaces 32, 32' on the rails 30, 30' on the railcar 4, and on the sliding surfaces 16, 16' on the rails 14 of the truck 6. The gripper mechanism can then be rotated again making is less wide. The arm can then push the gripper head 236 forward, pivoting the gripper mechanism again, and engaging the subsequent protrusions 74 in the third transverse channel 70 and the fourth transverse channel 72 of the transportation unit 2. This cycle will be repeated until the transportation unit 2 is transferred completely from the railcar 4 to the truck 6. Likewise, reversing the procedure and arranging the gripper mechanism on the opposite sides of the protrusions 74, the transportation unit can be pushed over from the truck towards the railcar.

After the transportation unit has been transferred from the railcar to the truck the second displaceable rod 210 is retracted from the transverse locking mechanism, releasing the bar 200 and allowing it to be retracted. At the same time as the bar is released, the pivotable locking member 154 is also allowed to pivot back into its transverse locking position. In case that the transportation unit has not been transferred fully, it will not be possible for the pivotable locking member to be pivoted back into its locking position, as the transportation unit will be arranged on top of the member. Hence, it will also not be possible to retract the bar 200. This is an extra safety precaution.

Finally the pivotally mounted, length adjustable support legs 38 are retracted from the ground surface 40, and folded up, and further transport of the transportation unit 2, now loaded on the truck 6, can be performed.

Figure 25 schematically shows details of the unique form of the rails 300 and channels 301 and how the form helps with aligning the transportation unit on the rails. In figures 25a-c, the rectangular bar illustrates a rectangular rail 300 on the truck or the railcar and the curved outline represents the inner walls of a channel 301 in the bottom surface of the transportation unit. As can be seen in figure 25a, the rail is arranged straight and the channel is attempting to slide onto the rail at an angle. This is possible due to the wider centre portion 302 of the channel. As the channel slides onto the rail, the channel is straightened up by the narrower portions of the channel, see figure 25b. Finally when the channel is fully placed on the rail, see figure 25c, the channel is fully aligned with the rail and the channel is held firmly on the rail via the narrow end portions 303 of the channel. In this way, during the sliding, slight misalignments are permitted, but once the channel is fully on the rail, it is held firmly in position.

Forming a channel having a curved inner surface can be complicated and/or expensive. A cheaper and simpler way of doing this is to have a channel with straight inner sides 304 and then place rectangular sliding blocks 305 at either end of the channel. This will have a similar effect. By chamfering or rounding the end edges of the sliding blocks and/or by chamfering or rounding the ends of the rail, the rails will not jam into the edges of the sliding blocks.

In the actual embodiment shown in the figures 1-24, the situation is opposite to the illustration in figures 25 a-c and the channel has straight sides and the rail has thicker end portions via sliding blocks placed at the ends of the rail and a narrower centre portion. The effect is however the same as with the illustrated channel having narrower ends and a wide centre portion.

Figure 26 schematically shows how the alignment device is arranged to ensure a vertical alignment of the ends of the rails, while still allowing the rails to pivot slightly with respect to each other about an axis which is coplanar with the rails and perpendicular to the rails.

The alignment device comprises a bar 400 which is slideably arranged in the rail 401 on the first vehicle (for example the truck). The bar is firmly arranged in the rail on the first vehicle such that it can only displace linearly along the axis of the rail. The bar is then extended such that it enters an opening 402 on the rail 403 on the second vehicle (for example the railcar). The opening is sized such that the bar is essentially locked in the opening in the vertical direction. The two rails are therefore locked together in the vertical direction and when one vehicle raises or lowers the end of its rail, the other vehicle is forced to follow.

The bar is however provided with a recess 404 in the top surface and the tip 405 of the bar is tapered. This allows the rails to pivot with respect to each other as is shown by figure 26b. This allows the two vehicles to move more naturally with respect to each other during the transfer of the container, without risking that the transportation unit jams on the rails.

It is to be noted that the above description has not described each individual technical feature. Many of the specific mechanical details have not been described since the person skilled in the art should be familiar with these details and they would just unnecessarily complicate this description. For example none of the hydraulic system details have been disclosed, but these should be easily implemented by the person skilled in the art of hydraulic systems.

### List of reference numerals:

- 2: transportation unit
- 4: **first transportation vehicle (railcar)**
- 6: **second transportation vehicle (truck)**
- 8: standard freight container
- 10: facilities in 8 for receiving locking pins
- 12: locking pins
- 14: load surface of 6
- 15,15': truck adapter units
- 16, 16': parallel rails on 14
- 18: longitudinal axis of 6 the second transportation vehicle (Truck)
- 20, 20': sliding surfaces on 16
- 22: longitudinal axis of the first transportation vehicle (railroad wagon)
- 24: frame of 2
- 26: load surface of the railroad wagon 4
- 27: Locking pins on load surface of the railroad wagon 4
- 28: transverse direction of 18 and 22
- 30, 30': rails on the first load surface of the first transportation vehicle 4 (railroad wagon)
- 32, 32': sliding surfaces on 30
- 34, 34': alignment device on the second transportation vehicle 6
- 36, 36': drag/push devices
- 38: pivotally mounted, length adjustable support legs
- 40: ground surface
- 42: vertical locking mechanism on 26 (vertical locking mechanism)
- 44: transverse locking mechanisms (blocking for unauthorized relative transverse displacement between the first transportation unit 2 and the load surface on first transport vehicle unit 26)

### The transportation unit 2:

- 46: first downwardly facing open channel in 2
- 46': second downwardly facing open channel in 2
- 48: first end of the first transportation unit 2
- 48': second end of the first transportation unit 2
- 50: longitudinal axis of the first transportation unit 2
- 52: first downwardly extending flange
- 54: second downwardly extending flange
- 56: third downwardly extending flange
- 58: fourth downwardly extending flange
- 60: downwardly facing sliding surface in the first downwardly facing channel 46 in 2
- 60': downwardly facing sliding surface in the second downwardly facing channel 46' in 2
- 62: mutually spaced plate shaped bars of 60 and 60'
- 64: downwardly facing side of 46, 46'
- 66: horizontal flange on the lower edge of second and the fourth downwardly extending flange 54, 58
- 68: straight edge portion of the bottom long side edge of the transportation unit 2
- 70: third transverse channel in 2
- 72: fourth transverse channel in 2
- 74: protrusions on the adjacent sides of 70 and 72
- 76: bottom of 46 and 48'
- 78: protrusion of 68 on 52 and 56
- 80: hole in locking pin 12 on the first transportation unit 2
- 82: Locking mechanism
- 84: endwise opening in 10
- 86: sidewise opening in 10
- 88: upwardly or downwardly facing opening in 10
- 90: pin
- 92: first end of 90, to be introduced in the hole 80 in 12
- 94: second end of 90
- 96: orthogonally extending plate shaped arm from 94
- 98: cam in the end of 94, extending on the avert
- 100: longitudinal extending flanges on 2
- 102: short tapered portion on 100
- 104: first recess in 100 located in alignment with the holes 80 in the pins 12
- 106: second recess (seat for 98) nearest to the ends 48, 48'

### Frame 110 on first transportation vehicle:

- 110: frame
- 112: first end of 110
- 114: second end of 110
- 115: Longitudinal axis of 110
- 116, 116': first sideways facing surfaces of 30, 30'
- 118, 118': second sideways facing surfaces of 30, 30'
- 120: guiding and sliding surfaces at the ends of 116, 116'

### The vertical locking mechanism:

- 130, 130': horizontally displaceable spring loaded locking plate of 42
- 132: upper guide plate for 130, 130'
- 134: lower guide plate for 130, 130'
- 136, 136': protruding portion outside the slits 122, 123 of 130, 130'
- 138, 138': first ends of 130
- 140, 140': second ends of 130
- 142, 142': springs anchored to the first sideways and the second sideways facing sides 116, 116', 118, 118' of the rails 30, 30'

### The transverse locking mechanism:

- 150: portion on the outside 152 of the frame 110
- 152: portion along outside of the frame 110
- 154: pivotal locking member
- 156: shaft for 154
- 158: first end of 154
- 160: second end of 154
- 162: top surface of the frame 110
- 164: portion (lower) of the second end 160
- 166: upper wall of the portion 150
- 168: surface on the first end 158 facing 115
- 170: outwardly facing wall of the portion 150
- 172: narrow opening in 170
- 174: larger opening in 170
- 176: narrow portion of 154
- 178: downwards facing straight edge of 176
- 180: upwards facing straight edge of 176
- 182: upwardly extending portion of 164
- 184: slit in the bottom of the rails 30, 30'
- 183: bottom of the rail 30, 30'
- 186: small downwards extending rectangular portion

### The alignment device:

- 200: horizontally displaceable bar
- 202: free truncated end of 200
- 204: opening bounded by 116, 118, 183, 206
- 205: spacer bars
- 206: bottom side of sliding surface of the rail 30
- 207: bottom side of the bar 200
- 208: opening in the bottom of the bar, cooperating with the slit 184, and the upwardly extending portion 182 of 180
- 210: second displaceable rod
- 212: downwards facing edge on 210
- 214: tapered end on 210
- 216: recessed portion on top surface of bar 200

### The drag/push device 36, 36':

- 230: displaceable drag/push pole
- 232: actuator for 230
- 234: free end of the drag/push pole 230
- 236: gripper head on 230
- 238: gripper mechanism in 203
- 240: gripper arm in 203

## Claims

1. A system comprising:
a. a first transportation vehicle (4) having a transportation surface (26) with a length and a width, where the length is greater than the width and where said transportation surface has two parallel and spaced apart upwardly facing elongated transfer surfaces (32,32') being arranged perpendicular to the longitudinal axis (22) of the transportation surface and extending essentially from one long side of the transportation surface to the other long side of the transportation surface,
b. a second transportation vehicle (6) having a transportation surface (14) with a length and a width, where the length is greater than the width and where said transportation surface has two parallel and spaced apart upwardly facing elongated transfer surfaces (20,20') being arranged perpendicular to the longitudinal axis (18) of the transportation surface and extending essentially from one long side of the transportation surface to the other long side of the transportation surface and
c. a transportation unit (8) having a length, a width and a height, said length being greater than said width and height and where said transportation unit comprises two parallel and spaced apart downwardly facing elongated transfer surfaces (60,60') being arranged perpendicular to the longitudinal axis (50) of the transportation unit and extending essentially from one long side of the transportation unit to the other long side of the transportation unit,
d. where said transfer surfaces on the transportation vehicles and unit are arranged such that the transportation unit can be supported on the first or second transportation vehicle such that the weight of the transportation unit is supported by the first or second transportation vehicle via the contact between the transfer surfaces and such that the transportation unit can be displaced along a direction parallel to longitudinal axis of the transfer surfaces, and
e. where said transfer surfaces on the transportation vehicles are arranged such that when the first and second transportation vehicles are arranged alongside each other, the transfer surfaces (32,32') on the first transportation vehicle can be aligned with the transfer surfaces (20,20') of the second transportation vehicle, so that the transportation unit can be displaced in a direction parallel to the longitudinal direction of the transfer surfaces of the transportation unit and transferred between the first transportation vehicle and the second transportation vehicle by being displaced along said transfer surfaces
f. where the system further comprises an aligning mechanism (34,34') having two connection members (200), said connection members each having a first position and a second position, in the first position, the connection member is only in contact with the first or second transportation vehicle respectively and in the second position the connection member is enabled such that it is in contact with both the second or first transportation vehicle respectively in addition to the first or second transportation vehicle,
g. and said connection members and said transportation vehicles are arranged such that the connection between the transportation vehicle and the connection member in the connection member's second position ensures vertical alignment of the adjacent ends of the upwardly facing transfer surfaces of the first and second transportation vehicles during the transfer of the transportation unit,
h. **characterized in that** the transportation surfaces of the first and/or the second transportation vehicles comprise two rails (16,16', 30,30') in the form of upwardly extending elongated ridges and **in that** the transfer surfaces are arranged as the upper surface of the rails and
i. **in that** the connection members are arranged inside the rails of one transportation vehicle in the connection members first position and extend into openings (204) in the rails of the other transportation vehicle in the connection members second position.

2. System according to claims 1, **characterized in that** in the second position, the connection member (200) is in contact with the upwardly facing transfer surfaces (32,32',20,20') of both the first and second transportation vehicles (4,6).

3. System according to any one of claims 1 to 2, **characterized in that** the connection members (200) are furthermore arranged to ensure horizontal alignment of the adjacent ends of the upwardly facing transfer surfaces (32,32',20,20') of the first and second transportation vehicles (4,6) during the transfer of the transportation unit in the direction parallel to the longitudinal axis of the transportation surface in the connection member's second position.

4. System according to any one of claims 1 to 3, **characterized in that** the connection members (200) of the aligning mechanism (34,34') are mounted on one transportation vehicle (6) and arranged to be extendable and retractable along a direction parallel to the longitudinal axis of the two transfer surfaces (20,20').

5. System according to any one of claims 1 to 4, **characterized in that** the connection members (200) are connected to the first transportation vehicle (4) in an area underneath its transfer surfaces (32,32') and are connected to the second transportation vehicle (6) in an area underneath its transfer surfaces (20,20').

6. System according to any of the claims 1 to 5, **characterized in that** the connection members (200) and the transportation vehicles (4,6) are arranged so that the two transfer surfaces (32,32') of the first transportation vehicle (4) are able to pivot with regards to the two transfer surfaces (20,20') of the second transportation vehicle (6) about an axis which is perpendicular to and co-planar with the longitudinal axis of the transfer surfaces of the first and second transportation vehicles.

7. System according to claim 6, **characterized in that** the engagement between the connection member (200) and at least one of the transportation vehicles (4) is pivotably arranged such that the connection member is able to pivot with regards to the transportation vehicle.

8. System according to claim 7, **characterized in that** one end (202) of the connection member (200) is tapered.

9. System according to any one of claims 6 to 8, **characterized in that** the connection member (200), in the first position, is connected to the second transportation vehicle (6) and **in that** a free end (202) of the connection member in the second position is inserted into an opening (204) in the first transportation vehicle (4).

10. System according to claim 9, **characterized in that** the free end (202) of the connection member (200) which is insertable into the opening (204) in the first transportation vehicle (4) and the opening in the first transportation vehicle are mutually formed such that vertical displacement between the free end of the connection member and the opening is prevented, but pivotable displacement between the connection member and the opening is permitted.

11. System according to any one of the claims 1 to 10, **characterized in that** the second transportation (6) and/or the first transportation vehicle (4) comprises a safety mechanism (182) to prevent the connection members (200) from being disconnected while the transportation unit (8) is in the process of being transferred between the first and second transportation vehicles.

12. System according to claim 11, **characterized in that** the safety mechanism (182) has two positions, a first position where the connection member (200) is in its second position and where the transportation unit (8) is prevented from displacing in a direction parallel to the transfer surfaces, (32,32',20,20') and a second position where the connection member is in its second position, where the connection between the connection member and the two transportation vehicles is locked and where the transportation unit is able to slide between the first and second transportation vehicles.

13. System according to claim 11 or 12, **characterized in that** the connection member (200) is formed with a hole (216) into which a pin (182) can be inserted in the second position of the connection member to lock the connection member to the transportation vehicle (4).

14. System according to claim 13, **characterized in that** the safety mechanism (182) comprises an elongated member (154) having two ends and being pivotably connected to the transportation vehicle at a location (156) between the two ends and where the pin (182) is connected to a first end and where in the first position of the safety mechanism the elongated member is in a first angular position and the pin is retracted from the hole (216) in the connection member (200) and the second end (158) of the elongated member extends above the transportation surface (26) of the transportation vehicle (4) such that a transportation unit (8) arranged on the transportation surface is prevented from displacing along the transportation surface and **in that** in the second position of the safety mechanism, the elongated member pivots to a second angular position where the pin is inserted into the hole in the connection member and the second end of the elongated member is arranged below the transportation surface of the transportation vehicle such that a transportation unit arranged on the transportation surface is permitted to displace along the transportation surface.

15. A transportation vehicle specifically arranged for use in a system according to any one of claims 1 to 14, said transportation vehicle (6) comprising:
a. a transportation surface (14) with a length and a width, where the length is greater than the width and where said transportation surface has two parallel and spaced apart upwardly facing elongated transfer surfaces (20,20') being arranged perpendicular to the longitudinal axis (18) of the transportation surface and extending essentially from one long side of the transportation surface to the other long side of the transportation surface,
b. said transfer surfaces being arranged such that a transportation unit (8) having a length, a width and a height, said length being greater than said width and height and where said transportation unit comprises two parallel and spaced apart downwardly facing elongated transfer surfaces (60,60') being arranged perpendicular to the longitudinal axis (50) of the transportation unit and extending essentially from one long side of the transportation unit to the other long side of the transportation unit, can be supported on the transportation vehicle such that the weight of the transportation unit is supported by the transportation vehicle via the contact between the transfer surfaces and such that the transportation unit can be displaced along a direction parallel to longitudinal axis of the transfer surfaces,
c. where the transportation vehicle further comprises an aligning mechanism (34,34') having two connection members (200), said connection members each having a first position and a second position, in the first position, the connection member is only in contact with the transportation vehicle and in the second position the connection member is enabled such that it is able to be in contact with an adjacent transportation vehicle in addition to the transportation vehicle (4),
d. and said connection members and said transportation vehicle are arranged such that the connection between the transportation vehicle and the connection member in the connection member's second position ensures vertical alignment of ends of the upwardly facing transfer surfaces (20,20') of the transportation vehicle and ends of upwardly facing transfer surfaces (32,32') of an adjacent transportation vehicle during transfer of the transportation unit
e. **characterized in that** the transportation surfaces of the transportation vehicle comprise two rails (16,16') in the form of upwardly extending elongated ridges and **in that** the transfer surfaces are arranged as the upper surface of the rails and
f. **in that** the connection members are arranged inside the rails of the transportation vehicle in the connection members first position and are able to extend into openings (204) in rails (30,30') of an adjacent transportation vehicle in the connection members second position.

## Patentansprüche

1. System, umfassend:
a. ein erstes Transportfahrzeug (4), das eine Transportoberfläche (26) mit einer Länge und einer Breite aufweist, wobei die Länge größer als die Breite ist, und wobei die Transportoberfläche zwei parallele und im Abstand voneinander nach oben weisende längliche Übertragungsoberflächen (32, 32') aufweist, die senkrecht zur Längsachse (22) der Transportoberfläche angeordnet sind und sich im Wesentlichen von einer langen Seite der Transportoberfläche zur anderen langen Seite der Transportoberfläche erstrecken,
b. ein zweites Transportfahrzeug (6), das eine Transportoberfläche (14) mit einer Länge und einer Breite aufweist, wobei die Länge größer als die Breite ist und wobei die Transportoberfläche zwei parallele und im Abstand voneinander nach oben weisende längliche Übertragungsoberflächen (20, 20') aufweist, die senkrecht zur Längsachse (18) der Transportoberfläche angeordnet sind und sich im Wesentlichen von einer langen Seite der Transportoberfläche zur anderen langen Seite der Transportoberfläche erstrecken, und
c. eine Transporteinheit (8), die eine Länge, eine Breite und eine Höhe aufweist, wobei die Länge größer als die Breite und Höhe ist, und wobei die Transporteinheit zwei parallele und im Abstand voneinander nach unten weisende längliche Übertragungsoberflächen (60, 60') umfasst, die senkrecht zur Längsachse (50) der Transporteinheit angeordnet sind, und sich im Wesentlichen von einer langen Seite der Transporteinheit zur anderen langen Seite der Transporteinheit erstrecken,
d. wobei die Übertragungsoberflächen an den Transportfahrzeugen und der Einheit angeordnet sind, sodass die Transporteinheit auf dem ersten oder zweiten Transportfahrzeug abgestützt werden kann, sodass das Gewicht der Transporteinheit durch das erste oder zweite Transportfahrzeug durch den Kontakt zwischen den Übertragungsoberflächen abgestützt wird, und sodass die Transporteinheit entlang einer Richtung parallel zur Längsachse der Übertragungsoberflächen verschoben werden kann, und
e. wobei die Übertragungsoberflächen auf den Transportfahrzeugen angeordnet sind, sodass, wenn das erste und zweite Transportfahrzeug nebeneinander angeordnet sind, die Übertragungsoberflächen (32, 32') auf dem ersten Transportfahrzeug mit den Übertragungsoberflächen (20, 20') des zweiten Transportfahrzeugs ausgerichtet werden können, sodass die Transporteinheit in einer Richtung parallel zur Längsrichtung der Übertragungsoberflächen der Transporteinheit verschoben, und zwischen dem ersten Transportfahrzeug und dem zweiten Transportfahrzeug übertragen werden kann, indem sie entlang der Übertragungsoberflächen verschoben wird
f. wobei das System weiter einen Ausrichtmechanismus (34, 34') umfasst, der zwei Verbindungselemente (200) aufweist, wobei die Verbindungselemente jeweils eine erste Position und eine zweite Position aufweisen, wobei das Verbindungselement in der ersten Position jeweils nur in Kontakt mit dem ersten oder zweiten Transportfahrzeug steht, und das Verbindungselement in der zweiten Position aktiviert ist, sodass es in Kontakt jeweils mit beiden, dem zweiten oder ersten Transportfahrzeug, zusätzlich zum ersten oder zweiten Transportfahrzeug steht,
g. und die Verbindungselemente und die Transportfahrzeuge angeordnet sind, sodass die Verbindung zwischen dem Transportfahrzeug und dem Verbindungselement in der zweiten Position des Verbindungselements für eine vertikale Ausrichtung der benachbarten Enden der nach oben weisenden Übertragungsoberflächen des ersten und zweiten Transportfahrzeugs während der Übertragung der Transporteinheit sorgt,
h. **dadurch gekennzeichnet, dass** die Transportoberflächen des ersten und/oder des zweiten Transportfahrzeugs zwei Schienen (16, 16', 30, 30') in Form von sich nach oben erstreckenden länglichen Graten umfassen, und dadurch dass die Übertragungsoberflächen als die obere Oberfläche der Schienen angeordnet sind, und
i. dadurch, dass die Verbindungselemente innerhalb der Schienen eines Transportfahrzeugs in der ersten Position der Verbindungselemente angeordnet sind, und sich in Öffnungen (204) in den Schienen des anderen Transportfahrzeugs in der zweiten Position der Verbindungselemente erstrecken.

2. System nach Anspruch 1, **dadurch gekennzeichnet, dass** das Verbindungselement (200) in der zweiten Position in Kontakt mit den nach oben weisenden Übertragungsoberflächen (32, 32',20, 20') von beiden, des ersten und zweiten Transportfahrzeugs (4, 6) steht.

3. System nach einem der Ansprüche 1 bis 2, **dadurch gekennzeichnet, dass** die Verbindungselemente (200) darüber hinaus angeordnet sind, um bei der Übertragung der Transporteinheit in der Richtung parallel zur Längsachse der Transportoberfläche in der zweiten Position des Verbindungselements für eine horizontale Ausrichtung der benachbarten Enden der nach oben weisenden Übertragungsoberflächen (32, 32',20, 20') des ersten und zweiten Transportfahrzeugs (4, 6) zu sorgen.

4. System nach einem der Ansprüche 1 bis 3, **dadurch gekennzeichnet, dass** die Verbindungselemente (200) des Ausrichtmechanismus (34, 34') an einem Transportfahrzeug (6) montiert, und angeordnet sind, um entlang einer Richtung parallel zur Längsachse der beiden Übertragungsoberflächen (20, 20') aus- und einfahrbar zu sein.

5. System nach einem der Ansprüche 1 bis 4, **dadurch gekennzeichnet, dass** die Verbindungselemente (200) mit dem ersten Transportfahrzeug (4) in einem Bereich unterhalb dessen Übertragungsoberflächen (32, 32') verbunden sind, und mit dem zweiten Transportfahrzeug (6) in einem Bereich unterhalb dessen Übertragungsoberflächen (20, 20') verbunden sind.

6. System nach einem der Ansprüche 1 bis 5, **dadurch gekennzeichnet, dass** die Verbindungselemente (200) und die Transportfahrzeuge (4, 6) angeordnet sind, sodass die beiden Übertragungsoberflächen (32, 32') des ersten Transportfahrzeugs (4) imstande sind, in Bezug auf die beiden Übertragungsoberflächen (20, 20') des zweiten Transportfahrzeugs (6) um eine Achse zu schwenken, die senkrecht und komplanar zur Längsachse der Übertragungsoberflächen des ersten und zweiten Transportfahrzeugs ist.

7. System nach Anspruch 6, **dadurch gekennzeichnet, dass** der Eingriff zwischen dem Verbindungselement (200) und mindestens einem der Transportfahrzeuge (4) schwenkbar angeordnet ist, sodass das Verbindungselement imstande ist, in Bezug auf das Transportfahrzeug zu schwenken.

8. System nach Anspruch 7, **dadurch gekennzeichnet, dass** ein Ende (202) des Verbindungselements (200) verjüngt ist.

9. System nach einem der Ansprüche 6 bis 8, **dadurch gekennzeichnet, dass** das Verbindungselement (200) in der ersten Position mit dem zweiten Transportfahrzeug (6) verbunden ist, und dadurch, dass ein freies Ende (202) des Verbindungselements in der zweiten Position in eine Öffnung (204) im ersten Transportfahrzeug (4) eingesetzt ist.

10. System nach Anspruch 9, **dadurch gekennzeichnet, dass** das freie Ende (202) des Verbindungselements (200), das in die Öffnung (204) im ersten Transportfahrzeug (4) einsetzbar ist, und die Öffnung im ersten Transportfahrzeug gegenseitig ausgebildet sind, sodass eine vertikale Verschiebung zwischen dem freien Ende des Verbindungselements und der Öffnung verhindert wird, eine Schwenkverschiebung zwischen dem Verbindungselement und der Öffnung jedoch ermöglicht wird.

11. System nach einem der Ansprüche 1 bis 10, **dadurch gekennzeichnet, dass** das zweite Transport- (6) und/oder das erste Transportfahrzeug (4) einen Sicherheitsmechanismus (182) umfasst, um zu verhindern, dass die Verbindungselemente (200) getrennt werden, während sich die Transporteinheit (8) im Prozess befindet, zwischen dem ersten und zweiten Transportfahrzeug übertragen zu werden.

12. System nach Anspruch 11, **dadurch gekennzeichnet, dass** der Sicherheitsmechanismus (182) zwei Positionen aufweist, eine erste Position, in der sich das Verbindungselement (200) in seiner zweiten Position befindet, und in der die Transporteinheit (8) an einer Verschiebung in einer Richtung parallel zu den Übertragungsoberflächen (32, 32',20, 20') gehindert wird, und eine zweite Position, in der sich das Verbindungselement in seiner zweiten Position befindet, in der die Verbindung zwischen dem Verbindungselement und den beiden Transportfahrzeugen verriegelt ist, und in der die Transporteinheit imstande ist, zwischen dem ersten und zweiten Transportfahrzeug zu gleiten.

13. System nach Anspruch 11 oder 12, **dadurch gekennzeichnet, dass** das Verbindungselement (200) mit einem Loch (216) ausgebildet ist, in das in der zweiten Position des Verbindungselements ein Stift (182) eingeführt werden kann, um das Verbindungselement an dem Transportfahrzeug (4) zu verriegeln.

14. System nach Anspruch 13, **dadurch gekennzeichnet, dass** der Sicherheitsmechanismus (182) ein längliches Element (154) umfasst, das zwei Enden aufweist, und an einer Stelle (156) zwischen den beiden Enden schwenkbar mit dem Transportfahrzeug verbunden ist, und wobei der Stift (182) mit einem ersten Ende verbunden ist, und wobei sich das längliche Element in der ersten Position des Sicherheitsmechanismus in einer ersten Winkelposition befindet, und der Stift aus dem Loch (216) in dem Verbindungselement (200) zurückgezogen ist, und sich das zweite Ende (158) des länglichen Elements über die Transportoberfläche (26) des Transportfahrzeugs (4) erstreckt, sodass eine auf der Transportoberfläche angeordnete Transporteinheit (8) an einer Verschiebung entlang der Transportoberfläche gehindert wird, und dadurch, dass das längliche Element in der zweiten Position des Sicherheitsmechanismus in eine zweite Winkelposition schwenkt, in welcher der Stift in das Loch in dem Verbindungselement eingeführt wird und das zweite Ende des länglichen Elements unterhalb der Transportoberfläche des Transportfahrzeugs angeordnet ist, sodass es einer Transporteinheit, die auf der Transportoberfläche angeordnet ist, erlaubt ist, sich entlang der Transportoberfläche zu verschieben.

15. Transportfahrzeug, das speziell zur Verwendung in einem System nach einem der Ansprüche 1 bis 14 ausgelegt ist, wobei das Transportfahrzeug (6) Folgendes umfasst:
a. eine Transportoberfläche (14) mit einer Länge und einer Breite, wobei die Länge größer als die Breite ist und wobei die Transportoberfläche zwei parallele und im Abstand voneinander nach oben weisende längliche Übertragungsoberflächen (20,20') aufweist, die senkrecht zur Längsachse (18) der Transportoberfläche angeordnet sind und sich im Wesentlichen von einer langen Seite zur anderen langen Seite der Transportoberfläche erstrecken,
b. wobei die Übertragungsoberflächen angeordnet sind, sodass eine Transporteinheit (8), die eine Länge, eine Breite und eine Höhe aufweist, wobei die Länge größer als die Breite und Höhe ist, und wobei die Transporteinheit zwei parallele und im Abstand voneinander nach unten weisende längliche Übertragungsoberflächen (60, 60') umfasst, die senkrecht zur Längsachse (50) der Transporteinheit angeordnet sind und sich im Wesentlichen von einer langen Seite der Transporteinheit zur anderen langen Seite der Transporteinheit erstrecken, auf dem Transportfahrzeug abgestützt werden können, sodass das Gewicht der Transporteinheit durch das Transportfahrzeug durch den Kontakt zwischen den Übertragungsoberflächen abgestützt wird, und sodass die Transporteinheit entlang einer Richtung parallel zur Längsachse der Übertragungsoberflächen verschoben werden kann, und
c. wobei das Transportfahrzeug weiter einen Ausrichtmechanismus (34, 34') umfasst, der zwei Verbindungselemente (200) aufweist, wobei die Verbindungselemente jeweils eine erste Position und eine zweite Position aufweisen, wobei das Verbindungselement in der ersten Position nur in Kontakt mit dem Transportfahrzeug steht, und das Verbindungselement in der zweiten Position aktiviert ist, sodass es imstande ist, in Kontakt mit einem benachbarten Transportfahrzeug zusätzlich zum Transportfahrzeug (4) zu stehen,
d. und die Verbindungselemente und das Transportfahrzeug angeordnet sind, sodass die Verbindung zwischen dem Transportfahrzeug und dem Verbindungselement in der zweiten Position des Verbindungselements bei der Übertragung der Transporteinheit für eine vertikale Ausrichtung von Enden der nach oben weisenden Übertragungsoberflächen (20, 20') des Transportfahrzeugs, und von Enden nach oben weisender Übertragungsoberflächen (32, 32') eines benachbarten Transportfahrzeugs sorgt,
e. **dadurch gekennzeichnet, dass** die Transportoberflächen des Transportfahrzeugs zwei Schienen (16,16') in Form von sich nach oben erstreckenden länglichen Graten umfassen, und dadurch, dass die Übertragungsoberflächen als obere Oberfläche der Schienen angeordnet sind, und
f. dadurch, dass die Verbindungselemente innerhalb der Schienen des Transportfahrzeugs in der ersten Position der Verbindungselemente angeordnet sind und imstande sind, sich in Öffnungen (204) in Schienen (30,30') eines benachbarten Transportfahrzeugs in der zweiten Position der Verbindungselemente zu erstrecken.

## Revendications

1. Système comprenant :
a. un premier véhicule de transport (4) présentant une surface de transport (26) avec une longueur et une largeur, dans lequel la longueur est supérieure à la largeur et dans lequel ladite surface de transport présente deux surfaces de transfert allongées parallèles et espacées orientées vers le haut (32, 32') étant agencées perpendiculairement à l'axe longitudinal (22) de la surface de transport et s'étendant essentiellement d'un côté long de la surface de transport à l'autre côté long de la surface de transport,
b. un second véhicule de transport (6) présentant une surface de transport (14) avec une longueur et une largeur, dans lequel la longueur est supérieure à la largeur et dans lequel ladite surface de transport présente deux surfaces de transfert allongées parallèles et espacées orientées vers le haut (20, 20') étant agencées perpendiculairement à l'axe longitudinal (18) de la surface de transport et s'étendant essentiellement d'un côté long de la surface de transport à l'autre côté long de la surface de transport, et
c. une unité de transport (8) présentant une longueur, une largeur et une hauteur, ladite longueur étant supérieure auxdites largeur et hauteur et dans lequel ladite unité de transport comprend deux surfaces de transfert allongées parallèles et espacées orientées vers le bas (60, 60') étant agencées perpendiculairement à l'axe longitudinal (50) de l'unité de transport et s'étendant essentiellement d'un côté long de l'unité de transport à l'autre côté long de l'unité de transport,
d. dans lequel lesdites surfaces de transfert sur les véhicules et l'unité de transport sont agencées de sorte que l'unité de transport puisse être supportée sur le premier ou le second véhicule de transport de sorte que le poids de l'unité de transport soit supporté par le premier ou le second véhicule de transport par l'intermédiaire du contact entre les surfaces de transfert et de sorte que l'unité de transport puisse être déplacée le long d'une direction parallèle à l'axe longitudinal des surfaces de transfert, et
e. dans lequel lesdites surfaces de transfert sur les véhicules de transport sont agencées de sorte que, lorsque les premier et second véhicules de transport sont agencés l'un à côté de l'autre, les surfaces de transfert (32, 32') sur le premier véhicule de transport puissent être alignées avec les surfaces de transfert (20 ,20') du second véhicule de transport, de sorte que l'unité de transport puisse être déplacée dans une direction parallèle à la direction longitudinale des surfaces de transfert de l'unité de transport et transférée entre le premier véhicule de transport et le second véhicule de transport en étant déplacée le long desdites surfaces de transfert,
f. dans lequel le système comprend en outre un mécanisme d'alignement (34, 34') présentant deux éléments de liaison (200), lesdits éléments de liaison présentant chacun une première position et une seconde position, dans la première position, l'élément de liaison est uniquement en contact avec le premier ou le second véhicule de transport respectivement et, dans la seconde position, l'élément de liaison est activé de sorte qu'il soit en contact à la fois avec le second ou le premier véhicule de transport respectivement en plus du premier ou du second véhicule de transport,
g. et lesdits éléments de liaison et lesdits véhicules de transport sont agencés de sorte que la liaison entre le véhicule de transport et l'élément de liaison dans la seconde position de l'élément de liaison assure un alignement vertical des extrémités adjacentes des surfaces de transfert orientées vers le haut des premier et second véhicules de transport lors du transfert de l'unité de transport,
h. **caractérisé en ce que** les surfaces de transport du premier et/ou du second véhicule de transport comprennent deux rails (16, 16', 30, 30') sous la forme de nervures allongées s'étendant vers le haut et **en ce que** les surfaces de transfert sont agencées en tant que surface supérieure des rails, et
i. **en ce que** les éléments de liaison sont agencés à l'intérieur des rails d'un véhicule de transport dans la première position des éléments de liaison et s'étendent dans des ouvertures (204) dans les rails de l'autre véhicule de transport dans la seconde position des éléments de liaison.

2. Système selon la revendication 1, **caractérisé en ce que**, dans la seconde position, l'élément de liaison (200) est en contact avec les surfaces de transfert orientées vers le haut (32, 32', 20, 20') à la fois des premier et second véhicules de transport (4, 6).

3. Système selon l'une quelconque des revendications 1 à 2, **caractérisé en ce que** les éléments de liaison (200) sont en outre agencés pour assurer un alignement horizontal des extrémités adjacentes des surfaces de transfert orientées vers le haut (32, 32', 20, 20') des premier et second véhicules de transport (4, 6) lors du transfert de l'unité de transport dans la direction parallèle à l'axe longitudinal de la surface de transport dans la seconde position de l'élément de liaison.

4. Système selon l'une quelconque des revendications 1 à 3, **caractérisé en ce que** les éléments de liaison (200) du mécanisme d'alignement (34, 34') sont montés sur un véhicule de transport (6) et agencés pour être extensibles et rétractables le long d'une direction parallèle à l'axe longitudinal des deux surfaces de transfert (20, 20').

5. Système selon l'une quelconque des revendications 1 à 4, **caractérisé en ce que** les éléments de liaison (200) sont reliés au premier véhicule de transport (4) dans une zone sous ses surfaces de transfert (32, 32') et sont reliés au second véhicule de transport (6) dans une zone sous ses surfaces de transfert (20, 20').

6. Système selon l'une quelconque des revendications 1 à 5, **caractérisé en ce que** les éléments de liaison (200) et les véhicules de transport (4, 6) sont agencés de sorte que les deux surfaces de transfert (32, 32') du premier véhicule de transport (4) sont capables de pivoter par rapport aux deux surfaces de transfert (20, 20') du second véhicule de transport (6) autour d'un axe qui est perpendiculaire et coplanaire à l'axe longitudinal des surfaces de transfert des premier et second véhicules de transport.

7. Système selon la revendication 6, **caractérisé en ce que** la mise en prise entre l'élément de liaison (200) et au moins l'un des véhicules de transport (4) est agencé de manière pivotante de sorte que l'élément de liaison est capable de pivoter par rapport au véhicule de transport.

8. Système selon la revendication 7, **caractérisé en ce qu'**une extrémité (202) de l'élément de liaison (200) est effilée.

9. Système selon l'une quelconque des revendications 6 à 8, **caractérisé en ce que** l'élément de liaison (200), dans la première position, est relié au second véhicule de transport (6) et **en ce qu'**une extrémité libre (202) de l'élément de liaison dans la seconde position est insérée dans une ouverture (204) dans le premier véhicule de transport (4).

10. Système selon la revendication 9, **caractérisé en ce que** l'extrémité libre (202) de l'élément de liaison (200) qui peut être insérée dans l'ouverture (204) dans le premier véhicule de transport (4) et l'ouverture dans le premier véhicule de transport sont formées mutuellement de sorte qu'un déplacement vertical entre l'extrémité libre de l'élément de liaison et l'ouverture soit empêché, mais qu'un déplacement pivotant entre l'élément de liaison et l'ouverture soit autorisé.

11. Système selon l'une quelconque des revendications 1 à 10, **caractérisé en ce que** le second véhicule de transport (6) et/ou le premier véhicule de transport (4) comprend un mécanisme de sécurité (182) pour empêcher la désolidarisation des éléments de liaison (200) pendant que l'unité de transport (8) est en cours de transfert entre les premier et second véhicules de transport.

12. Système selon la revendication 11, **caractérisé en ce que** le mécanisme de sécurité (182) présente deux positions, une première position dans laquelle l'élément de liaison (200) est dans sa seconde position et dans laquelle l'unité de transport (8) ne peut pas se déplacer dans une direction parallèle aux surfaces de transfert (32, 32', 20, 20') et une seconde position dans laquelle l'élément de liaison est dans sa seconde position, dans laquelle la liaison entre l'élément de liaison et les deux véhicules de transport est verrouillée et dans laquelle l'unité de transport est capable de glisser entre les premier et second véhicules de transport.

13. Système selon la revendication 11 ou 12, **caractérisé en ce que** l'élément de liaison (200) est muni d'un trou (216) dans lequel une broche (182) peut être insérée dans la seconde position de l'élément de liaison pour verrouiller l'élément de liaison au véhicule de transport (4).

14. Système selon la revendication 13, **caractérisé en ce que** le mécanisme de sécurité (182) comprend un élément allongé (154) présentant deux extrémités et étant relié de manière pivotante au véhicule de transport au niveau d'un emplacement (156) entre les deux extrémités et dans lequel la broche (182) est reliée à une première extrémité et dans lequel, dans la première position du mécanisme de sécurité, l'élément allongé est dans une première position angulaire et la broche est rétractée du trou (216) dans l'élément de liaison (200) et la seconde extrémité (158) de l'élément allongé s'étend au-dessus de la surface de transport (26) du véhicule de transport (4) de sorte qu'une unité de transport (8) agencée sur la surface de transport ne puisse pas se déplacer le long de la surface de transport et **en ce que**, dans la seconde position du mécanisme de sécurité, l'élément allongé pivote vers une seconde position angulaire dans laquelle la broche est insérée dans le trou dans l'élément de liaison et la seconde extrémité de l'élément allongé est agencée au-dessous de la surface de transport du véhicule de transport de sorte qu'une unité de transport agencée sur la surface de transport soit autorisée à se déplacer le long de la surface de transport.

15. Véhicule de transport spécifiquement agencé pour être utilisé dans un système selon l'une quelconque des revendications 1 à 14, ledit véhicule de transport (6) comprenant :
a. une surface de transport (14) avec une longueur et une largeur, dans lequel la longueur est supérieure à la largeur et dans lequel ladite surface de transport présente deux surfaces de transfert allongées parallèles et espacées orientées vers le haut (20, 20') étant agencées perpendiculairement à l'axe longitudinal (18) de la surface de transport et s'étendant essentiellement d'un côté long de la surface de transport à l'autre côté long de la surface de transport,
b. lesdites surfaces de transfert étant agencées de sorte qu'une unité de transport (8) présentant une longueur, une largeur et une hauteur, ladite longueur étant supérieure auxdites largeur et hauteur et dans lequel ladite unité de transport comprend deux surfaces de transfert allongées parallèles et espacées orientées vers le bas (60, 60') étant agencées perpendiculairement à l'axe longitudinal (50) de l'unité de transport et s'étendant essentiellement d'un côté long de l'unité de transport à l'autre côté long de l'unité de transport, puisse être supportée sur le véhicule de transport de sorte que le poids de l'unité de transport soit supporté par le véhicule de transport par l'intermédiaire du contact entre les surfaces de transfert et de sorte que l'unité de transport puisse être déplacée le long d'une direction parallèle à l'axe longitudinal des surfaces de transfert,
c. dans lequel le véhicule de transport comprend en outre un mécanisme d'alignement (34, 34') présentant deux éléments de liaison (200), lesdits éléments de liaison présentant chacun une première position et une seconde position, dans la première position, l'élément de liaison est uniquement en contact avec le véhicule de transport et, dans la seconde position, l'élément de liaison est activé de sorte qu'il soit capable d'être en contact avec un véhicule de transport adjacent en plus du véhicule de transport (4),
d. et lesdits éléments de liaison et ledit véhicule de transport sont agencés de sorte que la liaison entre le véhicule de transport et l'élément de liaison dans la seconde position de l'élément de liaison assure un alignement vertical d'extrémités des surfaces de transfert orientées vers le haut (20, 20') du véhicule de transport et d'extrémités de surfaces de transfert orientées vers le haut (32, 32') d'un véhicule de transport adjacent lors du transfert de l'unité de transport,
e. **caractérisé en ce que** les surfaces de transport du véhicule de transport comprennent deux rails (16, 16') sous la forme de nervures allongées s'étendant vers le haut et **en ce que** les surfaces de transfert sont agencées en tant que surface supérieure des rails, et
f. **en ce que** les éléments de liaison sont agencés à l'intérieur des rails du véhicule de transport dans la première position des éléments de liaison et sont capables de s'étendre dans des ouvertures (204) dans des rails (30, 30') d'un véhicule de transport adjacent dans la seconde position des éléments de liaison.
